(19)

Europäisches
Patentamt
European
Patent Office
Office européen
des brevets

(11) **EP 2 216 778 A1**

(12) **EUROPEAN PATENT APPLICATION**
published in accordance with Art. 153(4) EPC

(43) Date of publication:
**11.08.2010 Bulletin 2010/32**

(51) Int Cl.:
**G11B 7/0045** *(2006.01)*     **G11B 7/007** *(2006.01)*
**G11B 7/125** *(2006.01)*

(21) Application number: **08856951.2**

(22) Date of filing: **04.12.2008**

(86) International application number:
**PCT/JP2008/003591**

(87) International publication number:
**WO 2009/072287 (11.06.2009 Gazette 2009/24)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **04.12.2007 US 992133 P
06.12.2007 US 992734 P
01.12.2008 US 118695**

(71) Applicant: **Panasonic Corporation
Kadoma-shi
Osaka 571-8501 (JP)**

(72) Inventor: **The designation of the inventor has not
yet been filed**

(74) Representative: **Grünecker, Kinkeldey,
Stockmair & Schwanhäusser
Anwaltssozietät
Leopoldstrasse 4
80802 München (DE)**

(54) **INFORMATION RECORDING MEDIUM, RECORDING METHOD, RECORDING DEVICE, AND INTEGRATED CIRCUIT**

(57) Provided is an information recording medium which is compatible with a plurality of recording speeds and contains recording conditions of the recording speeds which have been recorded in advance. The recording conditions include: a parameter concerning a recording power for recording at each of the recording speeds and a parameter concerning a recording waveform; and other parameters concerning a recording power for performing a recording at a recording speed other than the aforementioned recording speeds by using a parameter concerning a recording waveform for performing a recording at the recording speed.

*FIG.1*

BCA AREA 110
LEAD-IN AREA 120
USER AREA 130
LEAD-OUT AREA 140

PIC AREA 121
PCA (OPC) AREA 122
INFO AREA 123

100

EP 2 216 778 A1

**Description**

**TECHNICAL FIELD**

The present invention relates to an information storage medium, a method and apparatus (recorder) for writing information on an information storage medium, and an integrated circuit that uses them. More particularly, the present invention relates to a method for determining the recording power for use to perform a write operation.

**BACKGROUND ART**

Various types of recordable information storage media including write-once information storage media (such as CD-Rs, DVD-Rs, and BD-Rs) and rewritable information storage media (CD-RWs, DVD-RWs and BD-REs), on which information is written with a laser beam, are used extensively today. Such an information storage medium on which information is written with a laser beam is generally called an optical disc". Following such naming, an information storage medium will be simply referred to herein as an "optical disc".

For an optical disc drive that writes information on such a recordable optical disc with a laser beam, it is the most important task to ensure good storage quality for every bit of information that has been written on the optical disc. However, the storage quality of information that has been written on an optical disc will vary according to the environment or temperature in or at which the optical disc drive is used to write that information. The storage quality is also variable according to the type or product quality of the optical disc used. That is why if a laser beam with inappropriate recording power were used due to those factors that vary while the information is being written, information could be written improperly. In that case, that piece of information could be not read properly anymore or could also be inaccurate even if it could be retrieved successfully. To avoid these inconveniences and stabilize the storage quality of information that has been written on an optical disc, the conventional optical disc drive determines the best recording power for writing information on a given optical disc before actually writing that information on it.

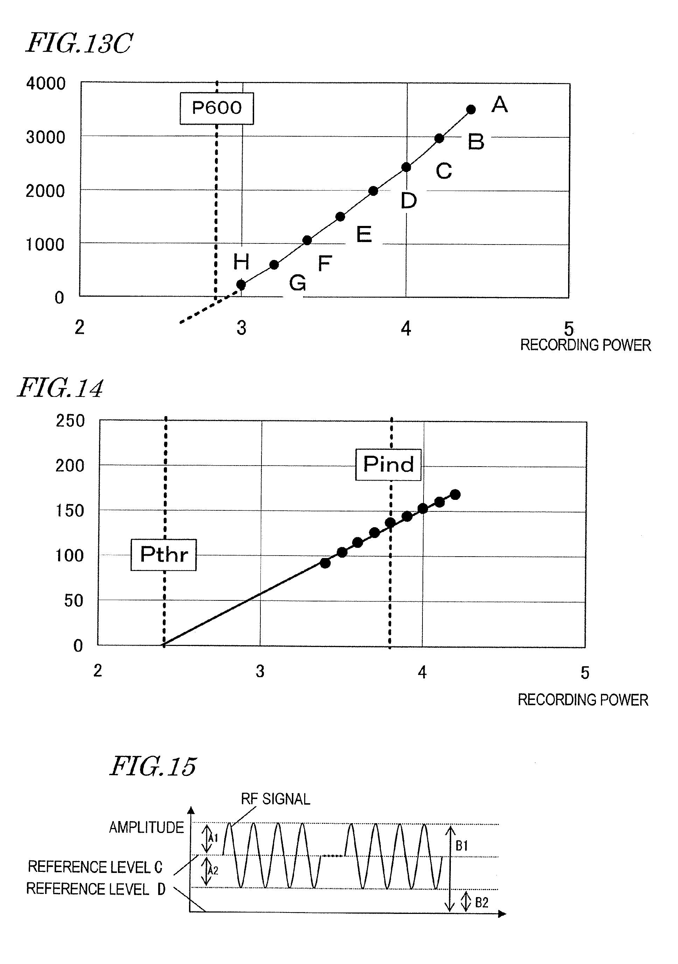

For example, there is a technique for determining the best recording laser power to write information by performing a power calibration (which is called "optimum power control (OPC)"). In performing this OPC, first of all, a predetermined sort of information is written with the laser powers changed in multiple steps on a power calibration area (PCA), which is also called an "OPC area", on a given optical disc. Next, each piece of that information written is read and the maximum value (i.e., peak value) **A1** and minimum value (i.e., bottom value) **A2** of the RF signal (read signal) thus generated are detected with respect to the reference level **C** thereof. FIG. **15** illustrates an example of such an RF signal. The reference level **C** for obtaining a β value is the average level of the entire amplitude of the RF signal and is equivalent to the level of a signal obtained by passing the RF signal through a high-pass filter (HPF), for which a predetermined pass band has been defined. As shown in FIG. **15,** the maximum and minimum values **A1** and **A2** of the amplitude of the RF signal are detected with respect to that reference level **C.** And based on the maximum and minimum values **A1** and **A2,** the β value is calculated by the following Equation (1):

$$\beta = (A1 + A2)/(A1 - A2)$$

The laser power when one of the β values obtained agrees with the target value is defined as the best recording laser power to perform a write operation, and information is written on the storage area (i.e., the user area) of the optical disc with that best recording laser power (see Patent Document No. 1, for example).

Alternatively, the degree of modulation of an RF signal may also be used to determine the best recording laser power. In that case, a predetermined sort of information is also written with the laser powers changed in multiple steps on a power calibration area on a given optical disc. Next, each piece of that information written is read and the maximum value (i.e., peak value) **B1** and minimum value (i.e., bottom value) **B2** of the RF signal thus generated are detected with respect to the reference level **D** thereof. As shown in FIG. **15,** the reference level **D** for obtaining the degree of modulation is a reference DC level for measuring the amplitude of the RF signal and is equivalent to the level when the laser beam is turned OFF. With respect to this reference level **D,** the maximum and minimum values **B1** and **B2** of the amplitude of the RF signal are obtained. The degree of modulation is calculated by the following Equation (2):

$$\text{Degree of modulation} = (B1 - B2)/B2 \qquad\qquad (2)$$

The laser power when the degree of modulation calculated agrees with the target value is defined as the best recording laser power to perform a write operation, and information is written on the storage area of the optical disc with that best recording laser power (see Patent Document No. 2, for example).

The best recording laser power is obtained using a signal measuring index such as the β value or the degree of modulation and information is written using such an index, thereby ensuring good storage quality for the information that has been written on an optical disc.

The target values of the β value and the degree of modulation are stored in advance as writing condition parameters in a PIC (permanent information and control data) area on an optical disc.

Meanwhile, the rate of writing on an optical disc can be controlled by either the CLV (constant linear velocity) technique or the CAV (constant angular velocity) technique. According to the CLV technique, a write operation on an optical disc is always performed at a constant linear velocity irrespective of the target location of the write operation, thus realizing a most stabilized write operation.

On the other hand, according to the CAV technique, a write operation on an optical disc is always performed at a constant rotational velocity irrespective of the target location of the write operation, thus getting the write operation done at the highest rate.

Also known are the Z-CLV (zone-constant linear velocity) technique and the P-CAV (partial-constant angular velocity) technique. According to the Z-CLV technique, a write operation is performed at a predetermined constant linear velocity on a zone-by-zone basis. On the other hand, according to the P-CAV technique, the write operation is performed by the CAV technique through a halfway point but the modes of operation are changed into the CLV technique when the velocity becomes the highest.

Recently, it has become more and more necessary to get information written on an optical disc in as short a time as possible, i.e., get the write operation done even more quickly by increasing the writing speed. For example, the information that has been written on a hard disk drive should be copied onto, or moved (or transferred) to, an optical disc in a shortest possible time. The writing speed is represented by either a linear velocity or a transfer rate. In this description, the "writing speed" specifically refers to a "linear velocity". Also, a standard writing speed is defined for each and every type of optical disc. And any writing speed is called **x writing speed, which means that the writing speed is ** times as high as the standard writing speed. Thus, the writing speeds are called 2x, 4x, 6x writing speeds and so on, or may sometimes be termed just 2x, 4x, 6x and so on.

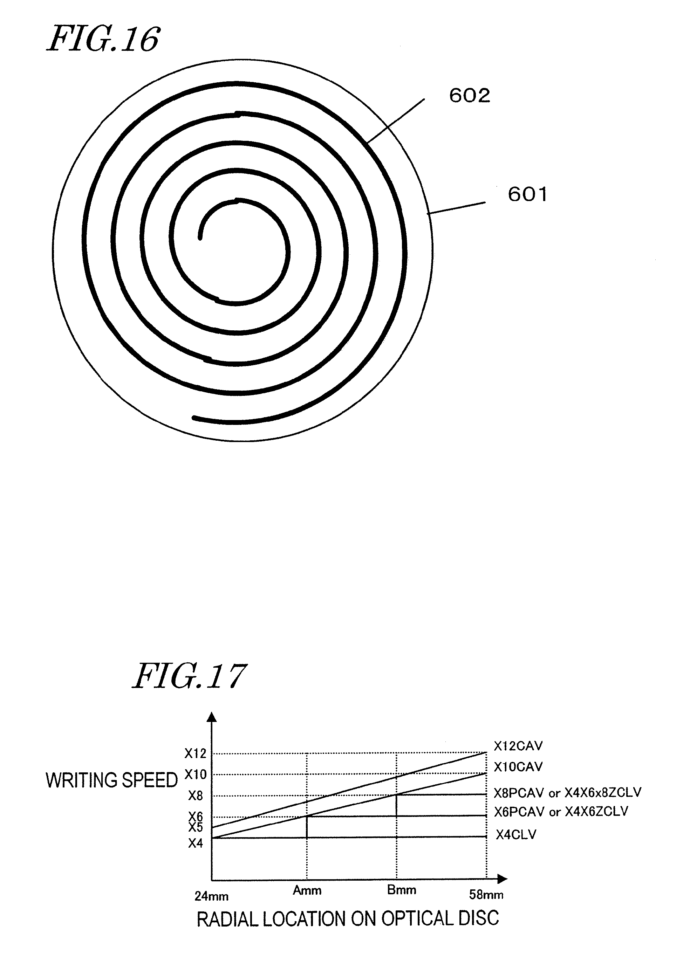

As shown in FIG. 16, an optical disc 601 normally has a spiral track 602 on which information is to be written, and marks and spaces are formed on the optical disc 601 by irradiating the track 602 with a light beam such that a space is left between each pair of marks. As a result, information such as user data that has been encoded into the forms of those marks and spaces can be written on the optical disc. The length of a portion of the track on which those marks and spaces are left as the optical disc makes one turn changes according to the radial location. That is why to write information with the same linear density on the inner and outer areas of the optical disc, the inner area should be rotated at a higher rotational velocity than the outer area. As for a DVD, for example, if a write operation needs to be performed at 16x writing speed on the innermost portion thereof, then the DVD should be rotated at a rotational velocity of approximately 22,000 revolutions per minute, which corresponds to about 360 revolutions per second.

However, considering the durability of polycarbonate that is the substrate material of an optical disc, it is generally taken for granted that an optical disc could be rotated at most at slightly more than approximately 10,000 revolutions per minute to use it safely. That is why it is impossible to perform the write operation at 16x writing speed on the innermost portion of a DVD as described above. Instead, the writing speed should be controlled so as to increase gradually from the inner area and eventually reach the 16x writing speed at most.

As for a BD, the standard (1x) writing speed (linear velocity) is approximately 4.9 m/s. To perform a write operation at a radial location of 24 mm, which is the innermost location on a BD, at this writing speed, the optical disc needs to have a rotational velocity of approximately 1,950 revolutions per minute. That is why if the highest rotational frequency of the optical disc has to be equal to or lower than 10,000 revolutions per minute in view of the durability of polycarbonate, then the write operation that can be performed at the innermost radial location of 24 mm should be done at a writing speed of 5x or less. That is to say, if the writing speed needs to be increased to shorten the amount of time it takes to get information written on an optical disc, then the write operation that can be performed on the innermost radial location of 24 mm should be done at most at 5x writing speed and the writing speed should be controlled such that the rotational frequency does not exceed 10,000 revolutions per minute at any other radial location.

In the past, the highest writing speed for BDs was 4x. That is why even if a write operation was performed at 4x writing speed on the innermost radial location of 24 mm, the rotational velocity never exceeded 1,000 revolutions per minute. However, since it has become more and more necessary to get information written at even higher speeds, information now should be written on a BD at 5x or higher writing speeds. In that case, the writing speed needs to be controlled as described above such that the rotational velocity of the optical disc does not exceed 10,000 revolutions per minute.

Patent Document No. 1: Japanese Patent No. 3259642
Patent Document No. 2: Japanese Patent Application Laid-Open Publication No. 2006-147125

## DISCLOSURE OF INVENTION

## PROBLEMS TO BE SOLVED BY THE INVENTION

Considering the limit imposed on the rotational velocity in view of the durability of polycarbonate described above, to increase the writing speed, the write operation on a BD could be performed by either the CAV technique or the Z-CLV technique. However, the writing condition parameters that are stored in advance on an optical disc as described above are defined only for the respective writing speeds on the supposition that the write operation is performed by the CLV technique.

In a DVD, for example, if the optical disc is adapted for 4x, 6x and 8x writing speeds, then 4x, 6x and 8x writing conditions defined for these three writing speeds are stored in the PIC area independently of each other as shown in the following Table 1:

[Table 1]

|  | Writing condition stored | | |
|---|---|---|---|
|  | 4x | 6x | 8x |
| 4x PIC | Writing conditions #1 | - | - |
| 6x PIC | - | Writing conditions #2 | - |
| 8x PIC | - | - | Writing conditions #3 |

The writing conditions include at least parameters that determine the recording power and parameters that define the write waveform. Examples of the parameters that determine the recording power include a target $\beta$ value and a target degree of modulation for determining the recording power, the recording power to be the reference recording power, and the ratio of powers. As shown in Table 1, the 4x PIC area includes only parameters that determine the recording power for use in a situation where a write operation is performed at the 4x writing speed and parameters that define the write waveform. Likewise, each of the 6x and 8x PIC areas includes only parameters that determine the recording power for use in a situation where a write operation is performed at the 6x or 8x writing speed and parameters that define the write waveform. Those parameters associated with each writing speed can be certainly used effectively at that writing speed. But there is no guarantee that those parameters associated with a certain writing speed could also be used at another writing speed no less effectively.

For example, if writing conditions #2 for the 6x writing speed are used to determine the recording power and write waveform for performing a write operation at 6x writing speed, predetermined storage quality is ensured. However, if the writing conditions #2 for the 6x writing speed are used to determine the recording power and write waveform for performing a write operation at a lower writing speed (e.g., at 4x) than 6x, then no good storage quality is ensured by the conditions adopted. That is to say, even if a write operation is performed by the CAV technique, in which the writing speed is supposed to vary, by using the writing condition parameters that have been defined by the CLV technique, in which the writing speed is supposed to be constant, no good storage quality is ensured.

That is why even if the writing condition parameters for performing a write operation by the CLV technique are stored as shown in Table 1 on a BD that is adapted for the 4x, 6x and 8x writing speeds as in a conventional DVD, the write operation cannot be performed by the CAV technique on the BD, either.

Also, as for a BD, the power calibration area that guarantees a film property is arranged only in the innermost area of the disc. Since the highest possible writing speed at the innermost radial location is 5x as described above, writing conditions for performing a write operation at 6x or higher speeds cannot be determined for the power calibration area that guarantees a film property. An additional power calibration area is sometimes arranged on the outermost area. Even so, the recording film property is sometimes not guaranteed in the outermost area and the best writing conditions for the 6x writing speed cannot be obtained. That is why supposing the Z-CLV technique is adopted such that the write operation is performed by the CLV technique at 5x or lower speeds in the inner area and then at 6x or higher speeds in the outer area, the best writing conditions cannot be determined for the outer area.

In order to overcome the problems described above, the present invention has an object of providing an information storage medium, a method and apparatus for writing information on it, and an integrated circuit that can determine the best writing condition (such as recording power) for a disc on which a write operation can be done by the CAV technique at higher speeds.

## MEANS FOR SOLVING THE PROBLEMS

An information storage medium according to the present invention is adapted for multiple different writing speeds and stores in advance writing conditions associated with each of the multiple writing speeds. The writing conditions include: a recording-power-related parameter and a write-waveform-related parameter, which are associated with each particular writing speed to perform a write operation at the particular writing speed; and another recording-power-related parameter for performing a write operation at a different writing speed other than the particular one using the recording-power-related parameter for performing the write operation at the particular writing speed.

In one preferred embodiment, the different writing speed other than the particular one is lower than the particular writing speed.

In another preferred embodiment, the multiple writing speeds include two speeds that are respectively four and six times as high as a standard writing speed.

In still another preferred embodiment, each of the recording-power-related parameter and the another recording-power-related parameter includes at least one target $\beta$ value.

In this particular preferred embodiment, the respective target $\beta$ values are defined such that signals generated by scanning recorded areas have substantially equal degrees of modulation.

In yet another preferred embodiment, the information storage medium has a BCA area or a PIC area and the writing conditions are stored in either the BCA area or the PIC area.

A writing method according to the present invention is a method for performing a write operation on a storage medium, on which writing conditions associated with each of multiple writing speeds are stored in advance, with the best recording power. The writing conditions include a parameter that defines a target for the recording power associated with each writing speed. The recording power is controlled by calculating the target for the recording power associated with each writing speed using the parameter such that signals generated by scanning recorded areas have substantially equal degrees of modulation.

In one preferred embodiment, the parameter that defines the target for the recording power associated with each writing speed is a $\beta$ index value.

In another preferred embodiment, the parameter that defines the target for the recording power associated with each writing speed is adapted for only a particular writing speed, and a target for the recording power associated with a writing speed that is not defined by the writing conditions is calculated by performing a linear approximation on the parameter of the writing speed defined by the writing conditions.

A recorder according to the present invention performs a write operation on a storage medium, which is adapted for multiple different writing speeds and on which writing conditions associated with each of the multiple writing speeds are stored in advance, with the best recording power. The writing conditions include a parameter that defines a target for the recording power associated with each writing speed. The recorder controls the recording power by calculating the target for the recording power associated with each writing speed using the parameter such that signals generated by scanning recorded areas have substantially equal degrees of modulation.

In one preferred embodiment, the parameter that defines the target for the recording power associated with each writing speed is $\beta$.

In another preferred embodiment, the parameter that defines the target for the recording power associated with each writing speed is adapted for only a particular writing speed, and a target for the recording power associated with a different writing speed other than the particular one is calculated by performing a linear approximation on the parameter that is adapted for only the particular writing speed.

An integrated circuit according to the present invention performs a write operation on a storage medium, which is adapted for multiple different writing speeds and on which writing conditions associated with each of the multiple writing speeds are stored in advance, with the best recording power. The writing conditions include a parameter that defines a target for the recording power associated with each writing speed. The integrated circuit controls the recording power by calculating the target for the recording power associated with each writing speed using the parameter such that signals generated by scanning recorded areas have substantially equal degrees of modulation.

In one preferred embodiment, the parameter that defines the target for the recording power associated with each writing speed is a $\beta$ index value.

In another preferred embodiment, the parameter that defines the target for the recording power associated with each writing speed is adapted for only a particular writing speed, and a target for the recording power associated with a writing speed that is not defined by the writing conditions is calculated by performing a linear approximation on the parameter of the writing speed defined by the writing conditions.

A writing method according to the present invention is a method for writing data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value, a first recording power value for writing data at a first linear velocity using the first pulse position parameter value, and a second recording power value for writing data at a second linear velocity, which is lower than the first linear velocity, using the first pulse position parameter value are stored in a predetermined area on either the information storage medium or a recorder. The first recording power for writing data at the first linear velocity is calculated based on the first recording power, the second recording power, and the second recording power in a situation where a test write operation has been performed at the second linear velocity using the first pulse position parameter value.

Another writing method according to the present invention is a method for writing data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value, a first recording power value for writing data at a first linear velocity using the first pulse position parameter value, a second pulse position parameter value, and a second recording power value for writing data at a second linear velocity, which is lower than the first linear velocity, using the second pulse position parameter value are stored in a predetermined area on either the information storage medium or an information recorder. The first recording power for writing data at the first linear velocity is calculated based on the first recording power, the second recording power, and the second recording power in a situation where a test write operation has been performed at the second linear velocity using the second pulse position parameter value.

Still another writing method according to the present invention is a method for writing data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value for writing data at a first linear velocity is stored in a predetermined area on either the information storage medium or an information recorder. A first recording power for writing data at the first linear velocity is calculated based on a second recording power in a situation where a test write operation has been performed at a second linear velocity, which is lower than the first linear velocity, using the first pulse position parameter value and a third recording power in a situation where a test write operation has been performed at a third linear velocity, which is lower than the second linear velocity, using the first pulse position parameter value.

A recorder according to the present invention writes data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value, a first recording power value for writing data at a first linear velocity using the first pulse position parameter value, and a second recording power value for writing data at a second linear velocity, which is lower than the first linear velocity, using the first pulse position parameter value are stored in a predetermined area on either the information storage medium or a recorder. The first recording power for writing data at the first linear velocity is calculated based on the first recording power, the second recording power, and the second recording power in a situation where a test write operation has been performed at the second linear velocity using the first pulse position parameter value.

Another recorder according to the present invention writes data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value, a first recording power value for writing data at a first linear velocity using the first pulse position parameter value, a second pulse position parameter value, and a second recording power value for writing data at a second linear velocity, which is lower than the first linear velocity, using the second pulse position parameter value are stored in a predetermined area on either the information storage medium or an information recorder. The first recording power for writing data at the first linear velocity is calculated based on the first recording power, the second recording power, and the second recording power in a situation where a test write operation has been performed at the second linear velocity using the second pulse position parameter value.

Still another recorder according to the present invention writes data on an information storage medium, on which a number of tracks are arranged either concentrically or spirally and on which data is to be written as marks and spaces between the marks by irradiating the storage plane of the tracks with a light beam. In determining the power of the light beam to irradiate to perform the write operation, a first pulse position parameter value for writing data at a first linear velocity is stored in a predetermined area on either the information storage medium or an information recorder. A first recording power for writing data at the first linear velocity is calculated based on a second recording power in a situation where a test write operation has been performed at a second linear velocity, which is lower than the first linear velocity, using the first pulse position parameter value and a third recording power in a situation where a test write operation has been performed at a third linear velocity, which is lower than the second linear velocity, using the first pulse position parameter value.

A playback method according to the present invention is a method for playing an information storage medium according to any of the preferred embodiments of the present invention described above. The method includes the steps of: irradiating the information storage medium with a light beam; and reading the writing conditions from the information storage medium.

## EFFECTS OF THE INVENTION

According to the present invention, by storing in advance a writing parameter, which satisfies a predetermined condition, on an information storage medium such as an optical disc, the best writing condition for a writing speed that is higher than the highest allowable writing speed in the innermost area can be obtained in the inner power calibration area. Also, by determining the recording power with the target $\beta$ value calculated for each writing speed such that the power control is performed with a constant degree of modulation, not with a constant $\beta$ value, when a write operation is performed by the CAV control technique, a recording power that always maximizes the power margin can be obtained. As a result, a predetermined storage quality can be maintained in any area on the optical disc, thus providing a system that achieves high-speed writing and good storage quality at the same time.

In addition, according to the present invention, the best recording power for performing a write operation at such a writing speed that is too high to perform a test write operation by the CAV technique can be predicted and a write operation can be performed just as intended even at that high writing speed.

Consequently, the present invention is effectively applicable to an optical disc such as a BD that will require a control of recording power with an even higher degree of precision to realize high density writing.

## BRIEF DESCRIPTION OF DRAWINGS

[FIG. 1] FIG. **1** illustrates the track structure of an optical disc as a first preferred embodiment of the present invention.
[FIG. 2] FIG. **2** shows how the writing speed, recording power and $\beta$ and degree of modulation change according to the radial location on an optical disc when an x4x6 ZCLV write operation is controlled by the first preferred embodiment.
[FIG. 3] FIG. **3** shows how the writing speed, recording power and $\beta$ and degree of modulation change according to the radial location on an optical disc when an x6 PCAV write operation is controlled by a second preferred embodiment.
[FIG. 4] FIG. **4** shows how the degree of modulation changes if $\beta$ is controlled to be constant by the x6 PCAV writing control technique.
[FIG. 5] FIG. **5** shows how the writing speed, recording power and $\beta$ and degree of modulation change according to the radial location on an optical disc when an x8 PCAV write operation is controlled by the second preferred embodiment.
[FIG. 6] FIG. **6** is a block diagram illustrating a configuration for an optical disc drive as a third preferred embodiment.
[FIG. 7A] FIG. **7A** is a plan view illustrating an optical disc as a fourth preferred embodiment.
[FIG. 7B] FIG. **7B** illustrates the track structure of the optical disc of the fourth preferred embodiment.
[FIG. 8] FIG. **8** is a block diagram illustrating an optical disc drive according to the fourth preferred embodiment.
[FIG. 9] FIG. **9** is a block diagram illustrating the reading section of the optical disc drive shown in FIG. **8.**
[FIG. 10] FIG. **10** shows optical pulse waveforms according to the fourth preferred embodiment.
[FIG. 11] FIG. **11** illustrates the arrangement of test writing areas according to the fourth preferred embodiment.
[FIG. 12] FIG. **12** shows how to calculate the degree of modulation of an RF signal.
[FIG. 13A] FIG. **13A** is a graph for use to determine the recording power in the fourth preferred embodiment.
[FIG. 13B] FIG. **13B** is another graph for use to determine the recording power in the fourth preferred embodiment.
[FIG. 13C] FIG. **13C** is still another graph for use to determine the recording power in the fourth preferred embodiment.
[FIG. 14] FIG. **14** is a graph for use to determine the recording power in the fourth preferred embodiment.
[FIG. 15] FIG. **15** shows how to calculate the degree of modulation of an RF signal.
[FIG. 16] FIG. **16** illustrates the structure of a conventional optical disc.
[FIG. 17] FIG. **17** illustrates a writing speed controlling method for use in the present invention.
[FIG. 18] FIG. **18** shows examples of write pulse waveforms that can be used in the present invention.
[FIG. 19] FIG. **19** shows other examples of write pulse waveforms that can be used in the present invention.
[FIG. 20] FIG. **20** shows still other examples of write pulse waveforms that can be used in the present invention.

## DESCRIPTION OF REFERENCE NUMERALS

| | |
|---|---|
| 100 | optical disc |
| 131 | optical head |
| 132 | motor |
| 133 | servo circuit |
| 134 | track address reader |
| 135 | CPU |
| 136 | data read/write circuit |
| 137 | data address reader |
| 110 | BCA area |
| 120 | lead-in area |
| 130 | user area |
| 151 | optical disc |
| 202 | optical head |
| 204 | reading section |
| 208 | recording power determining section |
| 210 | recording power setting section |
| 212 | laser driver |
| 214 | write data generating section |
| 215 | reading section A |
| 217 | servo position setting section |
| 221 | preamplifier |
| 222 | sample-and-hold circuit |
| 223 | A/D converter |
| 224 | ALU |
| 151 | track |
| 152 | control information storage area |
| 153 | test writing area |
| 154 | user data storage area |

## BEST MODE FOR CARRYING OUT THE INVENTION

FIG. **17** shows a specific example of a writing speed control method, which contributes to getting a write operation done on a BD at even higher speeds and to which the present invention is applicable. As shown in FIG. **17,** to get a write operation done on a BD at higher speeds than conventional ones, various alternative writing techniques such as x6 PCAV, x4x6 PZCLV, x8 PCAV, x4x6x8 PZCLV, x10 CAV and x12 CAV need to be considered. In this graph, the abscissa represents a radial location on a given optical disc, while the ordinate represents a writing speed. Also, in FIG. **17**, x4 CLV refers to a conventional method of performing a write operation at a constant linear velocity of 4x from the innermost location (24 mm) through the outermost location (58 mm).

According to the x6 PCAV method, a write operation is performed by the CAV technique from the innermost location (24 mm) through a radial location of A mm and then by an x6 CLV technique from the radial location of A mm through the outermost location (58 mm).

Meanwhile, according to the x4x6 PZCLV method, a write operation is performed by the x4 CLV technique from the innermost location (24 mm) through a radial location of A mm and then by an x6 CLV technique from the radial location of A mm through the outermost location (58 mm).

On the other hand, according to the x8 PCAV method, a write operation is performed by the CAV technique from the innermost location (24 mm) through a radial location of B mm and then by an x8 CLV technique from the radial location of B mm through the outermost location (58 mm).

Furthermore, according to the x4x6x8 PZCLV method, a write operation is performed by the x4 CLV technique from the innermost location (24 mm) through a radial location of A mm, by the x6 CLV technique from the radial location of A mm through a radial location of B mm, and then by an x8 CLV technique from the radial location of B mm through the outermost location (58 mm).

Furthermore, according to the x10 CAV technique, a write operation is performed at a constant rotational frequency of approximately 7,800 revolutions per minute from the innermost location of 24 mm through the outermost location of 58 mm.

And according to the x12 CAV technique, a write operation is performed at a constant rotational frequency of approximately 9,800 revolutions per minute from the innermost location of 24 mm through the outermost location of 58 mm.

Hereinafter, an information storage medium, a writing method, a recorder and an integrated circuit that can determine the best writing condition (such as the best recording power) in performing a write operation on a BD by any of these writing speed control techniques will be described in detail.

EMBODIMENT 1

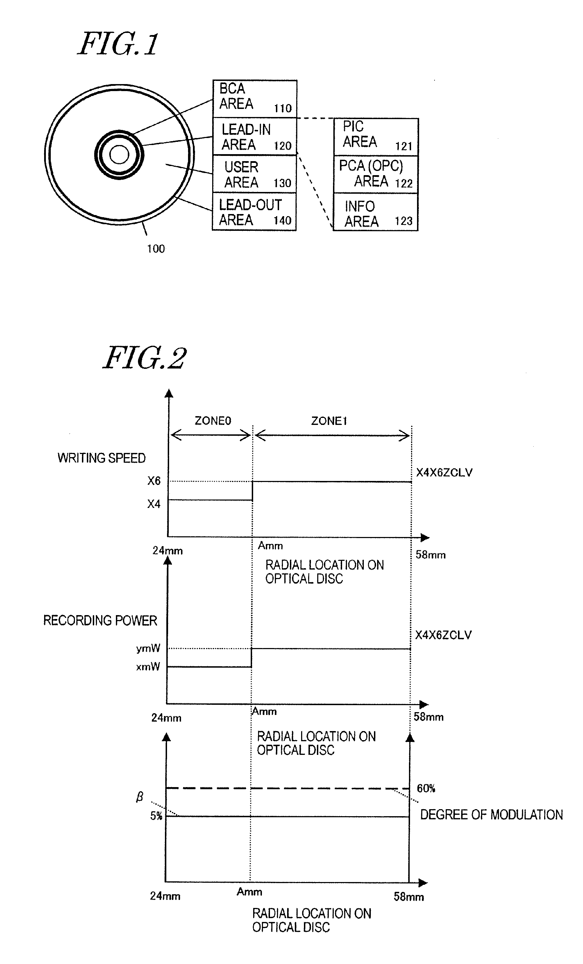

A first preferred embodiment of the present invention will be described. First of all, the track structure of an optical disc **100** according to this preferred embodiment will be described with reference to FIG. **1.** The optical disc **100** has a storage layer. By forming recording marks and spaces, which are left between the recording marks, on the storage layer, data is written on the optical disc **100.** As already described with reference to FIG. **16,** tracks are arranged concentrically on the optical disc **100.**

The optical disc **100** has a BCA (burst cutting area) **110,** a lead-in area **120,** a user area **130** and a lead-out area **140.**

In the BCA **110,** a barcode signal is stored in advance. That signal represents a serial number to identify the medium on a disc by disc basis, copyright information, and disc property information. That disc property information includes pieces of information indicating the number of storage layers included and the address management method to take.

The user area **130** is designed so as to allow the user to write his or her data thereon. That is to say, user data is written on the user area **130.** The user data may include audio data and visual data, for example.

Unlike the user area **130,** the lead-in area **120** is not designed to allow the user to write his or her data there. The lead-in area **120** includes a PIC (permanent information and control data) area **121,** an OPC (optimum power calibration) area **122** (which will also be referred to herein as a "PCA") and an INFO area **123.**

The PIC area **121** contains disc property information, which includes pieces of information indicating the number of storage layers and the address management method to take and access parameters. Examples of the access parameters include a parameter about the recording power of a laser beam that is used to make a recording mark on the optical disc **100** (and leave a space there if the disc is a write-once one) and to erase it if the disc is a rewritable one and a parameter about a write waveform such as the width of a write pulse to leave the recording mark.

The PCA **122** is an area, on/from which test data is written or read. The test data is written or read when an optical disc drive that is going to access the optical disc **100** adjusts an access parameter such as the recording power and the pulse width.

In the INFO area **123,** stored are management information for the user area **130,** which is indispensable for the apparatus that is going to access the optical disc **100,** and data to make a defect management on the user area **130.**

FIG. **2** illustrates an exemplary method for controlling a writing speed and a recording power according to a first preferred embodiment of the present invention, more specifically, how the writing speed and recording power should be controlled to perform a write operation on a BD at 6x writing speed. The optical disc of this preferred embodiment may be adapted for 4x, 6x and 8x writing speeds, for example. In FIG. **2,** illustrated is how the writing speed and recording power may be controlled for such an optical disc by an x4x6 ZCLV technique. In each of the three graphs shown in FIG. **2,** the abscissa represents the radial location [mm] on the optical disc, which falls within the range of 24 mm (innermost location) through 58 mm (outermost location). The ordinate of the upper graph represents the writing speed, that of the middle graph represents the recording power, and that of the lower graph represents β and the degree of modulation.

As shown in FIG. **2,** the entire area on the disc, which extends from the innermost location of the disc through the outermost location thereof, is divided into inner ZONE 0 and outer ZONE 1. As shown in the upper graph of FIG. **2,** a write operation is performed by 4x CLV in ZONE 0 and by 6x CLV in ZONE 1, respectively. That is why 4x writing condition parameters are used in ZONE 0 and 6x writing condition parameters are used in ZONE 1. These writing condition parameters are stored in advance in the PIC area of the optical disc, for example. And the optical disc drive gets those writing conditions by scanning the PIC area, for example.

The boundary between ZONES 0 and 1 may be set at a radial location at which the optical disc has a rotational frequency of 10,000 revolutions per minute or less and at which a write operation can be performed at 6x writing speed. In FIG. **2,** A mm indicates the radial location where the writing speeds are changed. If a write operation is performed from the inner area toward the outer area, for example, the write operation may be performed at 4x inside of the radial location of A mm and at 6x at and outside of the radial location of A mm, respectively.

The middle graph of FIG. **2** represents the recording power of a light beam for use to perform a write operation. As shown in FIG. **2,** the recording power is x mW in ZONE 0 and y mW in ZONE 1, respectively, where y is greater than x. And the recording power changes at the boundary between ZONES 0 and 1. Since an ideal situation is shown in FIG. **2,** the recording power is supposed to be constant in both of ZONES 0 and 1. However, in a situation where a write operation is performed at a constant writing speed, the recording power may also be varied. For example, if a power control is performed using a β value as an index, the best recording powers may be changed with a variation in various control parameters in the optical disc drive or a variation in the film property of the optical disc according to the radial location.

And the lower graph of FIG. **2** represents β and the degree of modulation obtained by performing a write operation with the recording power controlled using a β value as an index and by reading the information that has been written. In this preferred embodiment, the recording power is controlled and information is written such that the β value becomes 5% in each of ZONES 0 and 1. In that case, the write operation is performed such that the degree of modulation is always 60%. By controlling the recording power over the entire surface of the storage medium in this manner such that the recording film of the storage medium, on which information is going to be written, has the degree of modulation of the area where the write operation has been performed in the best condition, the best storage quality can be achieved. As a result, the write operation can be performed so as to maximize the recording power margin.

The recording power control using the β value is performed for the purpose of performing a write operation with the degree of modulation kept constant. And it is not essential to keep the β value at a predetermined level. As there is a recording power area that is not sensitive enough to a variation in the degree of modulation, sometimes it may be difficult to control the recording power using the degree of modulation. On the other hand, β is an index that varies very sensitively to any variation in recording power, and therefore, can be used effectively to control the recording power. That is to say, the key to getting the recording power control done to maintain the best storage quality is to control the recording power such that the degree of modulation always has a predetermined level.

The following Table 2 summarizes the writing conditions that are stored on the optical disc of this preferred embodiment. As described above, writing conditions for performing a write operation at 4x, 6x and 8x are stored on the optical disc. The writing conditions include parameters about the recording power (i.e., parameters for use to determine the best recording power) and parameters about the write waveform. Only some of those parameters about the recording power are shown in following Table 2:

[Table 2]

| Writing speed | 4x | 6x | 8x |
|---|---|---|---|
| x4 PIC | Pw44, β44 | β46 | β48 |
| x6 PIC | β64 | Pw66, β66 | β68 |
| x8 PIC | β84 | β86 | Pw88, β88 |

As described above, the optical disc of this preferred embodiment is adapted for 4x, 6x and 8x writing speeds. That is why parameters for determining recording powers to perform a write operation at 4x, 6x and 8x are stored in the PIC area to realize the best recording powers when a write operation is performed at the 4x, 6x and 8x writing speeds. Specifically, x4 PIC to determine the recording power at 4x includes Pw44 and β 44. Likewise, x6 PIC to determine the recording power at 6x includes Pw66 and β 66 and x8 PIC to determine the recording power at 8x includes Pw88 and β 88. These are recording-power-related parameters for use to perform a write operation at the writing speeds of 4x, 6x and 8x, for which the optical disc are adapted.

In Table 2, the left digit of each two-digit numeral attached to Pw and β indicates the writing speed that is associated with the parameter about the write waveform to use, while the right digit indicates the writing speed at which a read/write operation is actually performed. Thus, x4 PIC, x6 PIC and x8 PIC include parameters about the write waveforms that are associated with the 4x, 6x and 8x writing speeds, respectively. That is to say, if x4 PIC, x6 PIC or x8 PIC is used, then parameters about the write waveform that is associated with the 4x, 6x or 8x writing speed are used, irrespective of the writing speed actually used in performing a write operation.

Also, Pw** of each writing speed includes the ratio of each power level to the target (i.e., recommended) recording power, the target degree of modulation and a coefficient for use to make power adjustment. These values are used to determine the recording power at that writing speed as described above. That is why to determine the best recording power to perform a write operation at 6x, a test write operation must be actually performed at 6x in the prior art. In other words, the recording power to perform a write operation at 4x cannot be determined using Pw66 and β 66, for example.

In order to overcome such problems, the optical disc of this preferred embodiment includes not only the writing conditions described above but also other recording-power-related parameters for performing a write operation at a different writing speed using the recording-power-related parameters to perform a write operation at one of 4x, 6x and 8x writing speeds, for which the optical disc are adapted. For example, β 64 for determining the recording power at 4x using x6 PIC parameters for determining the recording power at 6x (i.e., Pw66 and Pw44) is stored as one of the x6 PIC parameters. Specifically, the recording power at 4x may be determined using Pw66 and $\beta$ 66 in the following manner:

STEP 1

First of all, perform a test write operation on the inner power calibration area at 4x writing speed using x6 PIC parameters. Specifically, write a predetermined sort of information (i.e., a test writing pattern) at 4x writing speed with the recording powers of the laser beam changed in multiple steps using the x6 PIC parameters.

STEP 2

Read the written pattern from that area and calculate the $\beta$ value of the RF signal, generated by adopting each recording power, by Equation (1). Next, search for a recording power **PP** that has generated an RF signal with the same $\beta$ value as $\beta$ 64 that is stored on the optical disc. If there are no $\beta$ values that agree with $\beta$ 64, then the recording power **PP** may be estimated by making either interpolation or approximation on the $\beta$ value of an RF signal generated by adopting each recording power. The recording power **PP** thus obtained is the best recording power for performing a write operation at 4x using the x6 PIC parameters.

STEP 3

Multiply the recording power **PP** by the ratio of Pw66, which is stored in advance as a writing condition, to Pw44 (i.e., the Pw66/Pw44 ratio), thereby determining the best recording power to perform a write operation at 6x writing speed. $\beta$ 64 is preferably defined such that the recorded area will have the same degree of modulation, no matter whether the write operation is performed at 4x writing speed or 6x writing speed using the x6 PIC parameters. As a result, the best recording power for performing a write operation at 6x can be determined by carrying out a test write operation at 4x writing speed.

As described above, an optical disc should not be rotated at a frequency exceeding 10,000 revolutions per minute, considering the durability of polycarbonate that forms the substrates of the optical disc. That is why as for a BD, the recording power condition cannot be determined by performing a test write operation at the x6 CLV writing speed on the inner power calibration area.

However, according to this preferred embodiment, by performing a test write operation at 4x writing speed on the power calibration area following the procedure of this preferred embodiment described above, the best recording power to perform a write operation at 6x can be determined. Since this recording power is determined using the inner power calibration area that ensures good quality, the recording power can be determined with high precision. Consequently, using the recording power that has been determined in this manner, a write operation can get done with good quality, too.

In the foregoing description, a method for controlling the writing speed and the recording power by x4x6 ZCLV has been described as a preferred embodiment of the present invention. However, as the optical disc is also adapted for 8x, a write operation can also be performed at 8x. That is why a parameter $\beta$ 84 for determining the recording power at 4x writing speed using x8 PIC parameters may be further stored on the optical disc of this preferred embodiment as shown in Table 1. Consequently, the best recording power to perform a write operation at 8x can be determined by carrying out a test write operation at 4x writing speed. Specifically, the following processing steps need to be carried out:

STEP 1

First of all, perform a test write operation on the inner power calibration area at 4x writing speed using x8 PIC parameters. Specifically, write a predetermined sort of information at 4x writing speed with the recording powers of the laser beam changed in multiple steps using the x8 PIC parameters.

STEP 2

Read the written pattern from that area and calculate the $\beta$ value of the RF signal, generated by adopting each recording power, by Equation (1). Next, search for a recording power **PP** that has generated an RF signal with the same $\beta$ value as $\beta$ 84 that is stored on the optical disc. If there are no $\beta$ values that agree with $\beta$ 84, then the recording power **PP** may be estimated by making either interpolation or approximation on the $\beta$ value of an RF signal generated by adopting each recording power. The recording power **PP** thus obtained is the best recording power for performing a write operation at 4x using the x8 PIC parameters.

STEP 3

Multiply the recording power **PP** by the ratio of Pw88, which is stored in advance as a writing condition, to Pw44 (i.e., the Pw88/Pw44 ratio), thereby determining the best recording power to perform a write operation at 8x writing speed. $\beta$ 84 is preferably defined such that the recorded area will have the same degree of modulation, no matter whether the write operation is performed at 4x writing speed or 8x writing speed using the x8 PIC parameters. As a result, the best recording power for performing a write operation at 8x can be determined by carrying out a test write operation at 4x writing speed.

As described above, according to this preferred embodiment, other recording-power-related parameters for performing a write operation at a different writing speed using recording-power-related parameters to perform a write operation at any of the 4x, 6x and 8x writing speeds, for which the optical disc is adapted, are also stored. That is why the best recording power for a writing speed, at which a write operation has not been actually performed, can also be calculated. Among other things, if recording-power-related parameters to perform a write operation at a lower writing speed than the 4x, 6x or 8x writing speed, for which the optical disc is adapted, are stored, the recording power to perform a write operation at the higher writing speed can be calculated by carrying out a test write operation at the lower writing speed. More specifically, if $\beta$ 64, $\beta$ 84 and $\beta$ 86 are stored as writing conditions on the optical disc, the recording power to perform a write operation at 6x or 8x writing speed can be calculated by carrying out a test write operation at 4x writing speed. Likewise, the recording power to perform a write operation at 8x writing speed can also be calculated by carrying out a test write operation at 6x writing speed.

As shown in Table 1, $\beta$ 46, $\beta$ 48, $\beta$ 86 and $\beta$ 68 may be further stored on the optical disc. These values can be used effectively to control the recording power in a situation where a write operation is performed by the CAV technique. It will be described for a second preferred embodiment of the present invention exactly how to perform a write operation by the CAV technique.

EMBODIMENT 2

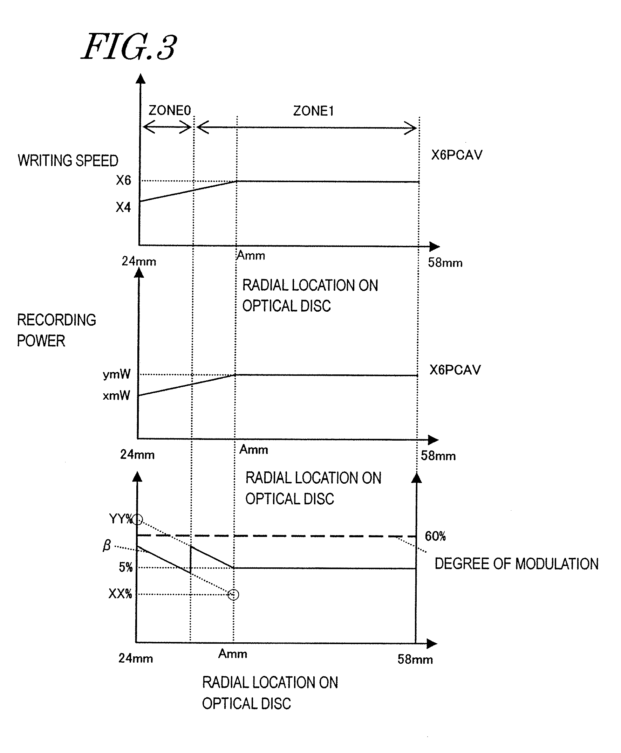

Hereinafter, a second preferred embodiment of the present invention will be described. FIG. **3** illustrates an exemplary method for controlling a writing speed and a recording power according to the second preferred embodiment of the present invention, more specifically, how the writing speed and recording power should be controlled to perform a write operation on a BD at 6x writing speed. The optical disc of this preferred embodiment may be adapted for 4x, 6x and 8x writing speeds, for example. In FIG. **3,** illustrated is how the writing speed and recording power may be controlled for such an optical disc by an x6 CAV technique. In each of the three graphs shown in FIG. **3,** the abscissa represents the radial location [mm] on the optical disc, which falls within the range of 24 mm (innermost location) through 58 mm (outermost location). The ordinate of the upper graph represents the writing speed, that of the middle graph represents the recording power, and that of the lower graph represents $\beta$ and the degree of modulation.

As shown in the upper graph of FIG. **3,** the writing speed at the innermost location is 4x, and a write operation is performed by the CAV technique from the innermost location through a radial location of A mm and then by x6 CLV technique from the radial location of A mm through the outermost location. If a BD continues being rotated at a constant rotational velocity such that the writing speed becomes 4x at the innermost location, the more distant from that radial location, the higher and higher than 4x the writing speed gets. And at the radial location of A mm, the writing speed reaches 6x.

As also shown in the upper graph of FIG. **3**, the entire area on the disc, which extends from the innermost location of the disc through the outermost location thereof, is divided into inner ZONE 0 and outer ZONE 1. When a write operation is performed, 4x writing condition parameters are used in ZONE 0 and 6x writing condition parameters are used in ZONE 1. The boundary between ZONES 0 and 1 is preferably set at a radial location at which the writing speed is halfway between 4x and 6x, e.g., at a radial location at which the writing speed is 5x.

The middle graph of FIG. **3** represents the recording power of a light beam for use to perform a write operation. At the innermost radial location of 24 mm, the writing speed is 4x, which indicates that a write operation is performed with a recording power x mW, for example. As the target radial location of the write operation moves outward, the recording power rises at a certain rate. And at the radial location of A mm at which the writing speeds are switched into 6x, the write operation starts to be performed with a recording power of y mW. And outside of the radial location of A mm, a write operation is performed by the x6 CLV technique, and therefore, the recording power is kept constant. Since an ideal situation is shown in FIG. **3**, the recording power is supposed to be increased at a constant rate in the CAV writing control zone and then become constant in the CLV writing control zone. However, if a power control is performed using a $\beta$ value as an index, the best recording powers may be changed with a variation in various control parameters in the optical disc drive or a variation in the film property of the optical disc according to the radial location.

And the lower graph of FIG. **3** represents $\beta$ and the degree of modulation obtained by performing a write operation with the recording power controlled using a $\beta$ value as an index and by reading the information that has been written.

In this preferred embodiment, the recording power is controlled and information is written such that the degree of modulation is always 60% anywhere on the optical disc. To keep the degree of modulation constant, the variation in β at a constant rate with the writing condition parameter and the writing speed is taken advantage of. And by varying target β with the writing speed, the recording power is controlled to keep the degree of modulation constant in the recorded area.

By controlling the recording power over the entire surface of the storage medium in this manner such that the recording film of the storage medium, on which information is going to be written, has the degree of modulation of the area where the write operation has been performed in the best condition, the best storage quality can be achieved. As a result, the write operation can be performed so as to maximize the recording power margin.

The recording power control using the β value is performed for the purpose of performing a write operation with the degree of modulation kept constant. And it is not essential to keep the β value at a predetermined level. As there is a recording power area that is not sensitive enough to a variation in the degree of modulation, sometimes it may be difficult to control the recording power using the degree of modulation. On the other hand, β is an index that varies very sensitively to any variation in recording power, and therefore, can be used effectively to control the recording power. That is to say, the key to getting the recording power control done to maintain the best storage quality is to control the recording power such that the degree of modulation always has a predetermined level.

In the PIC area of the optical disc of this preferred embodiment, stored are the writing condition parameters shown in Table 1 that has already been referred to in the description of the first preferred embodiment. As described above, writing conditions for performing a write operation at 4x, 6x and 8x are stored on the optical disc. The writing conditions include parameters about the recording power (i.e., parameters for use to determine the best recording power) and parameters about the write waveform. Only some of those parameters about the recording power are shown in following Table 2.

As described above, the optical disc of this preferred embodiment is adapted for 4x, 6x and 8x writing speeds. That is why parameters for determining recording powers to perform a write operation at 4x, 6x and 8x are stored in the PIC area to realize the best recording powers when a write operation is performed at the 4x, 6x and 8x writing speeds. Specifically, x4 PIC to determine the recording power at 4x includes Pw44 and β44. Likewise, x6 PIC to determine the recording power at 6x includes Pw66 and β 66 and x8 PIC to determine the recording power at 8x includes Pw88 and β88. Also, Pw** of each writing speed includes the ratio of each power level to the target (i.e., recommended) recording power, the target degree of modulation and a coefficient for use to make power adjustment. These values are used to determine the recording power at that writing speed as described above. That is why to determine the best recording power to perform a write operation at 6x, a test write operation must be actually performed at 6x in the prior art. In other words, the recording power to perform a write operation at 4x cannot be determined using Pw66 and β66, for example.

In order to overcome such problems, the optical disc of this preferred embodiment includes not only the writing conditions described above but also β64 for determining the recording power at 4x using Pw66 and Pw44, which are included in x6 PIC parameters for determining the recording power at 6x, as one of the x6 PIC parameters. The recording power at 4x may be determined using Pw66 and β66 as already described for the first preferred embodiment. Specifically, the following processing steps are carried out:

STEP 1

First of all, perform a test write operation on the inner power calibration area at 4x writing speed using x6 PIC parameters. Specifically, write a predetermined sort of information at 4x writing speed with the recording powers of the laser beam changed in multiple steps using the x6 PIC parameters.

STEP 2

Read the test written pattern from that area and calculate the β value of the RF signal, generated by adopting each recording power, by Equation (1). Next, search for a recording power **PP** that has generated an RF signal with the same β value as β64 that is stored on the optical disc. If there are no β values that agree with β64, then the recording power **PP** may be estimated by making either interpolation or approximation on the β value of an RF signal generated by adopting each recording power. The recording power **PP** thus obtained is the best recording power for performing a write operation at 4x using the x6 PIC parameters.

STEP 3

Multiply the recording power **PP** by the ratio of Pw66, which is stored in advance as a writing condition, to Pw44 (i.e., the Pw66/Pw44 ratio), thereby determining the best recording power to perform a write operation at 6x writing speed. β64 is preferably defined such that the recorded area will have the same degree of modulation, no matter whether the write operation is performed at 4x writing speed or 6x writing speed using the x6 PIC parameters. As a result, the best recording power for performing a write operation at 6x can be determined by carrying out a test write operation at 4x writing speed.

As described above, an optical disc should not be rotated at a frequency exceeding 10,000 revolutions per minute, considering the durability of polycarbonate that forms the substrates of the optical disc. That is why as for a BD, the recording power condition cannot be determined by performing a test write operation at the x6 CLV writing speed on the inner power calibration area.

However, according to this preferred embodiment, by performing a test write operation at 4x writing speed on the power calibration area following the procedure of this preferred embodiment described above, the best recording power to perform a write operation at 6x can be determined. Since this recording power is determined using the inner power calibration area that ensures good quality, the recording power can be determined with high precision. Consequently, using the recording power that has been determined in this manner, a write operation can get done with good quality, too.

Next, it will be described how to determine and control the recording power by the CAV technique. For that purpose, β46, β48, β68, β84 and β86 shown in Table 2 are used.

According to this preferred embodiment, the recording power is controlled such that the degree of modulation becomes 60% over the entire surface, i.e., from the innermost location of the disc through the outermost location thereof, as shown in the lower graph of FIG. 3. To get this done, the recording power is controlled using β as described above.

In the lower graph shown in FIG. 3, the β value XX corresponds to β46 and the β value YY corresponds to β64. As described above, according to this preferred embodiment, a write operation is performed by the CAV technique on ZONE 0 using 4x writing condition parameters until the writing speed reaches 5x. Next, on ZONE 1, a write operation is performed by the CAV technique using 6x writing condition parameters until the 5x writing speed reaches 6x. And once the writing speed has reached 6x, a write operation is performed by the CLV technique.

In this case, the recording powers to be determined on the inner power calibration area are a recording power **SS1** for the 4x writing conditions at the 4x writing speed and a recording power **SS2** for the 6x writing conditions at the 4x writing speed.

At the writing start point of ZONE 0, i.e., at the innermost radial location of 24 mm, the recording power for the 4x writing speed is SS1. The recording power SS1 has been regulated such that the β value becomes β44. That is to say, the recording power is determined using Pw44 and β44, which are x4 PIC parameters.

Next, from the writing start point through the writing end point of ZONE 0, the write operation is performed with the recording power controlled by making a linear approximation of a target β value as a function of the radial location using β44 for the 4x writing speed and β46 (XX %) for the 6x writing speed so that β has a value on that approximation line. Specifically, the write operation is suspended either at regular time intervals or at regular radial intervals to measure the β value of the recorded area. Then, the difference between the β value measured and the target β value to be obtained by making the linear approximation on the radial location is transformed into a recording power difference and the write operation is performed with the recording power updated. This preferred embodiment is **characterized in that** this target β value changes linearly, for example, with the writing speed.

In the same way, at the writing start point of ZONE 1, the recording power that has been determined at 4x using the 6x writing conditions as described above is used. From the writing start point of ZONE 1 through A mm, the write operation is performed with the recording power controlled by making a linear approximation of a target β value as a function of the radial location using β64 (YY%) and β66 so that β has a value on that approximation line. Specifically, the write operation is suspended either at regular time intervals or at regular radial intervals to measure the β value of the recorded area. Then, the difference between the β value measured and the target β value to be obtained by making the linear approximation on the radial location is transformed into a recording power difference and the write operation is continued with the recording power updated. This preferred embodiment is **characterized in that** this target β value changes linearly, for example, with the writing speed.

And outside of the radial location of A mm in ZONE 1, the write operation is performed by the CLV technique. That is why the write operation is performed with the recording power controlled using β66 as a target β value, without making a linear approximation of the β value.

By performing such a recording power control, the write operation can be performed so that the degree of modulation becomes constant over the entire surface of the optical disc and good storage quality can be maintained.

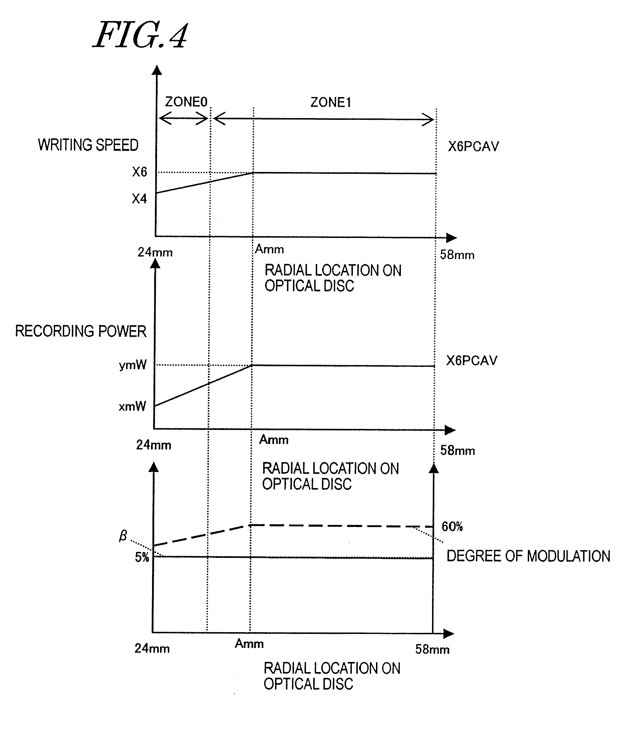

β varies with the writing speed because even if the write waveform is varied proportionally to the writing speed in response to write clock pulses, neither the write pulse width nor the leading and trailing edge timings or shapes of the write waveform change proportionally to the writing speed. That is why if the recording power were controlled so that β never changes, then the write operation would be performed with the degree of modulation varying, and good storage quality could not be maintained anymore. FIG. **4** shows how the degree of modulation changes if the recording power is controlled so as to keep β constant in a situation where a write operation is performed by the x6 PCAV as in FIG. **3**.

As shown in the lower graph of FIG. **4**, if the recording power is controlled so as to keep β constant at 5%, for example, in an area where the write operation is performed by the CAV technique, then the write operation cannot be performed so that the degree of modulation becomes constant. As a result, the storage quality could deteriorate significantly.

As described above, according to this preferred embodiment, β64 is used to determine, at the 4x writing speed, the best recording power to perform a 6x write operation based on the 6x writing conditions. Also, even when a write operation is performed by the CAV technique, β64 is used to control the recording power as the writing speed varies. Likewise, β46 is also used to control the recording power with a variation in writing speed when a write operation is performed by the CAV technique.

That is why by storing β64 and β46 on an optical disc in advance, the best recording power to perform a 6x write operation can be determined by performing a test write operation at 4x writing speed on the inner power calibration area that ensures good storage quality. In addition, the best recording power to perform a write operation by the CAV technique can also be determined.

In the foregoing description, a method for controlling the writing speed and the recording power by x6 PCA has been described as a preferred embodiment of the present invention. However, as the optical disc is also adapted for 8x, a write operation can also be performed at 8x. That is why a parameter β84 for determining the recording power at 4x writing speed using x8 PIC parameters may be further stored on the optical disc of this preferred embodiment as shown in Table 1. Consequently, the best recording power to perform a write operation at 8x can be determined by carrying out a test write operation at 4x writing speed. Specifically, the following processing steps need to be carried out:

STEP 1

First of all, perform a test write operation on the inner power calibration area at 4x writing speed using x8 PIC parameters. Specifically, write a predetermined sort of information at 4x writing speed with the recording powers of the laser beam changed in multiple steps using the x8 PIC parameters.

STEP 2

Read the test writing pattern from that area and calculate the β value of the RF signal, generated by adopting each recording power, by Equation (1). Next, search for a recording power **PP** that has generated an RF signal with the same β value as β84 that is stored on the optical disc. If there are no β values that agree with β84, then the recording power **PP** may be estimated by making either interpolation or approximation on the β value of an RF signal generated by adopting each recording power. The recording power **PP** thus obtained is the best recording power for performing a write operation at 4x using the x8 PIC parameters.

STEP 3

Multiply the recording power **PP** by the ratio of Pw88, which is stored in advance as a writing condition, to Pw44 (i.e., the Pw88/Pw44 ratio), thereby determining the best recording power to perform a write operation at 8x writing speed. β84 is preferably defined such that the recorded area will have the same degree of modulation, no matter whether the write operation is performed at 4x writing speed or 8x writing speed using the x8 PIC parameters. As a result, the best recording power for performing a write operation at 8x can be determined by carrying out a test write operation at 4x writing speed.

Also, β48, β68, β84 and β86 are write parameters that can be used particularly effectively to perform a CAV write operation such as x8 PCAV.

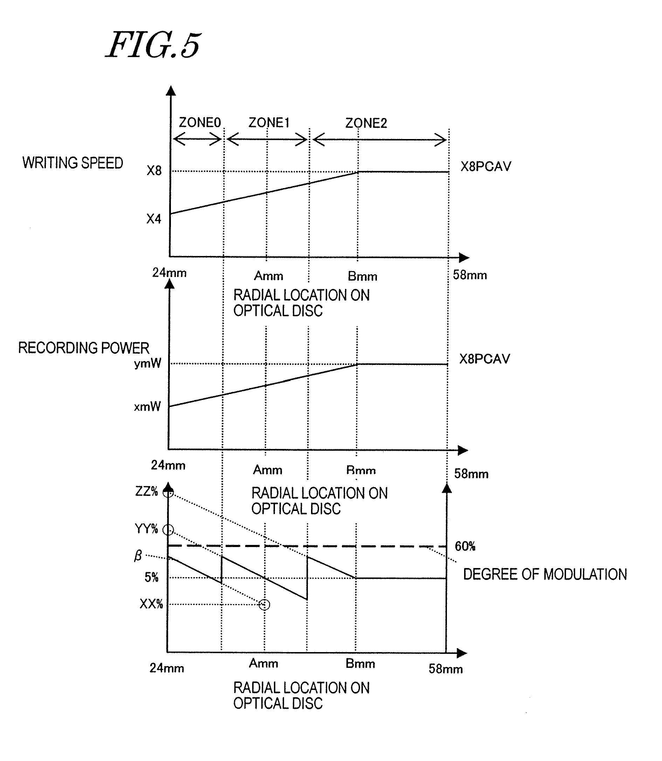

FIG. **5** illustrates an exemplary method for controlling a writing speed and a recording power in a situation where an x8 PCAV write operation is performed on the optical disc of this preferred embodiment. As in FIG. **4,** in each of the three graphs shown in FIG. **5,** the abscissa represents the radial location [mm] on the optical disc, which falls within the range of 24 mm (innermost location) through 58 mm (outermost location). The ordinate of the upper graph represents the writing speed, that of the middle graph represents the recording power, and that of the lower graph represents β and the degree of modulation.

In this example, the entire area on the disc, which extends from the innermost location of the disc through the outermost location thereof, is divided into inner ZONE 0, outer ZONE 2, and ZONE 1 interposed between ZONES 0 and 1. 4x, 6x and 8x writing conditions are used in these three ZONES 0, 1 and 2, respectively. The radial location of B mm is a radial location at which the writing speeds are changed into 8x, while the radial location of A mm is a radial location at which the writing speeds are changed into 6x. As shown in the lower graph of FIG. **5**, β84 is a write parameter that corresponds to ZZ% and is used to determine, at 4x writing speed, writing conditions for 8x writing speed. The same method for controlling the recording power as the procedure shown in FIG. **2** is also adopted in this example, and the description thereof will be omitted herein.

β48 is used to calculate a target β value for a situation where a write operation is performed at a writing speed of 8x or less based on 4x writing speed conditions. β 68 is used to calculate a target β value for a situation where a write operation is performed at a writing speed of 8x or less based on 6x writing speed conditions. And β86 is used to calculate a target β value for a situation where a write operation is performed at a writing speed of 6x or less based on 8x writing speed conditions. As already described with reference to FIG. **4**, the target β value is linearly approximated as a function of the radial location. However, β may also be approximated as a function of the writing speed. In that case, β is proportional to the halfth power of the writing speed and can be approximated linearly.

In the first and second preferred embodiments of the present invention described above, the entire storage area of the optical disc is divided into multiple ZONES and the writing conditions for a particular writing speed are determined on a zone-by-zone basis. However, the arrangement of those ZONES is not particularly limited. That is to say, the number of ZONES may be increased or decreased. Or information may be written on the entire surface on only one writing condition, without using multiple writing conditions. For example, in performing an x6 PCAV write operation, the write operation may be performed at varying writing speeds of 5x through 6x using the 4x writing condition. In any case, the number of ZONES and which writing speed needs to define the writing condition for which ZONE may be determined to ensure at least a predetermined degree of storage quality.

In the first and second preferred embodiments, the target β value is supposed to be constant in the area where the writing speed is controlled by the CLV. However, as in the CAV method, the target β value may also be varied with the film property of the optical disc taken into consideration.

Also, the writing conditions for each writing speed are not limited to write parameters that have been stored in advance in the PIC area or any other area of the optical disc. Alternatively, the optical disc drive may store those write parameters for each optical disc and use them as writing condition parameters as well.

Furthermore, the optical disc of the first and second preferred embodiments of the present invention described above is adapted for 4x, 6x and 8x writing. However, the optical disc of the first and second preferred embodiments may also be adapted for 2x writing. In that case, Pw22, β22, β24, β26, β42 and β62 may be further stored as x2 PIC parameters.

Still alternatively, the optical disc may also be adapted for 2x, 4x, 6x, 8x and 10x writing. In that case, the data shown in the following Table 3 is preferably stored in the PIC area of the optical disc. Then, the best recording power to perform a write operation at 6x, 8x or 10x writing speed can be determined by performing a test write operation at 4x writing speed on the inner power calibration area, which ensures good storage quality, using the β64, β84 and β10_4 values in accordance with the procedure of the first preferred embodiment described above.

[Table 3]

| Writing speed | 2x | 4x | 6x | 8x | 10x |
|---|---|---|---|---|---|
| x2 PIC | Pw22, β 22 | β24 | β26 | β28 | β2_10 |
| x4 PIC | β42 | Pw44, β44 | β46 | β48 | β4_10 |
| x6 PIC | β62 | β64 | Pw66, β66 | β68 | β6_10 |
| x8 PIC | β82 | β84 | β86 | Pw88, β 88 | β8_10 |
| x10 PIC | β10,2 | β10_4 | β10_6 | β10_8 | Pw10_10, β10_10 |

Furthermore, in the first and second preferred embodiments described above, β is stored as a writing condition. Instead of, or in addition to, β, ρ, Pind, κ, n, εe and εbw to be described later for the fourth preferred embodiment of the present invention may be stored in the PIC area or OPA area of the optical disc.


EMBODIMENT 3

Hereinafter, an optical disc drive for controlling the best recording power using those writing conditions for the respective writing speeds will be described.

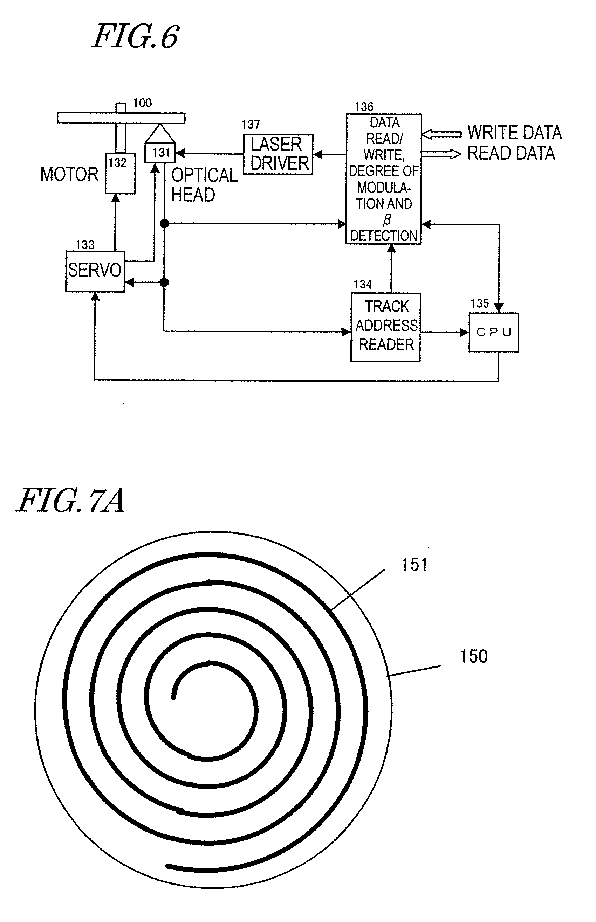

FIG. **6** is a block diagram illustrating a configuration for an optical disc drive as a preferred embodiment of a recorder according to the present invention. As shown in FIG. **6**, the optical disc drive includes an optical head **131,** a motor **132,** a servo circuit **133,** a track address reader **134,** a CPU **135,** a data read/write circuit **136,** and a laser driver **137** and writes information on the optical disc **100.**

As already described with reference to FIG. **16,** the optical disc **100** has tracks on which data is written, and address values are recorded on the tracks in accordance with the address format. The tracks are arranged as wobbled ones and represent the address values by the frequency of that wobbling or the degree of phase modulation. Also, the optical disc **100** has the track structure that has already been described with reference to FIG. **1,** and a PIC area **121** in which the writing condition parameters shown in Table 1, for example, are stored and a PCA (or OPC) area **122** for use to perform a test write operation thereon are included in the lead-in area **120.**

The optical head **131** irradiates the optical disc **100** with a light beam and detects the intensity of the light reflected from the optical disc **100** while following the tracks, thereby outputting an electrical signal.

The motor **132** rotates the optical disc **100** at a rotational frequency specified.

The servo circuit **133** extracts a servo error signal, representing the degree of convergence of the light beam on the target track, from the electrical signal and performs a focus servo control and a tracking servo control using the servo error signal so that the light beam is not only focused on the target track on the optical disc **100** but also follows the target tracks just as intended. The servo circuit **133** also controls the radial location of the light beam spot on the optical disc **100** and the rotational frequency of the motor **132** to keep the location and the frequency as close to the best ones as possible.

The track address reader **134** extracts a wobble signal, representing the wobbling pattern of a target track on the optical disc **800,** from the electrical signal and demodulates the address value that has been recorded in advance on that track from the wobble signal. Also, the track address reader **134** detects sync locations on the track both on a block-by-block basis and on a subblock-by-subblock basis.

The CPU **135** gets the address value that has been demodulated by the track address reader **134,** instructs the servo circuit **133** to search for a block from/on which data needs to be read or written, and then instructs the data read/write circuit **136** to perform a read/write operation on the target block that has been found as a result of the search.

When instructed to write data by the CPU **135,** the data read/write circuit **136** adds an error correction code and a data address, which complies with a predetermined format, to the write data and also subjects the data to a data modulation process, thereby generating a write signal. And the data read/write circuit **136** gets the intensity of the light beam from the optical head **131** controlled by the laser driver **137** such that a mark representing the write signal is recorded on the specified block on the target track at the sync location timing that has been detected by the track address reader **134,** thereby writing data there.

On the other hand, when instructed to read data by the CPU **135,** the data read/write circuit **136** extracts a data signal, representing the mark that has been recorded on the designated block on the target track of the optical disc **100,** from the electrical signal at the sync location timing that has been detected by the track address reader **204,** demodulates data from the data signal conversely to the modulation during the write operation described above, and then performs error correction processing, thereby outputting read data.

The data read/write circuit **206** further includes a circuit for detecting a degree of modulation or β from the read signal. If the writing condition of the preferred embodiments described above needs to be determined, the data read/write circuit **206** detects either the degree of modulation or β from the read signal and notifies the CPU of the result.

The laser driver **137** controls the laser beam emitting operation of the optical head **131** in accordance with a laser beam emission waveform pattern supplied from the data read/write circuit **136.**

Hereinafter, it will be described how this optical disc drive operates when a writing condition (e.g., the best recording power among other things) needs to be determined following the procedure that has been described for the first and second preferred embodiments.

First of all, the optical disc drive reads the writing condition that is stored in advance on the optical disc **100.** More specifically, the CPU **135** instructs the servo circuit **133** to move the optical head **131** to the PIC area **121,** thereby getting PIC information, including the writing conditions, read by the data read/write circuit **206.** Also, the CPU **135** gets the optical head **131** further moved to the PCA area **122,** adjusts the rotational frequency of the motor **132** to a predetermined value, and then gets a predetermined write pattern written on the PCA area **122** on a predetermined writing condition and with a recording power for a different writing speed by the data read/write circuit **206** and the laser driver **137.** Then, the patterns that have been written with the respective recording powers are read by the data read/write circuit **136** and their degrees of modulation and β values are detected. As already described for the first preferred embodiment, the CPU **135** calculates a recording power associated with the target β value based on a result of the detection. A more specific procedure is disclosed in Patent Document No. 2, for example.

In this manner, the optical disc drive performs a test write operation on an inner test writing area at a writing speed, which is allowed even in the inner area, using writing conditions for a higher writing speed that exceeds the highest allowable rotational frequency in the inner area as already described for the first preferred embodiment. The optical disc drive detects the degree of modulation and β by performing the test write operation, thereby determining the best recording power for the writing speed that is allowed even in the inner area and the best recording power for the writing speed that exceeds the highest allowable rotational frequency in the inner area based on the degree of modulation and β that have been detected and the writing conditions that are stored in advance in the PIC area. More specifically, the optical disc drive may perform a test write operation at the 4x writing speed using writing conditions for the 6x writing speed and can determine the best recording power for 4x and the best recording power for 6x using a writing condition parameter β64 and the writing conditions for the 6x writing speed as already described for the first preferred embodiment.

By following a similar operation procedure as for any other writing speed, the optical disc drive can determine the best recording power to perform a write operation at any desired writing speed.

Also, even when the writing speed needs to be controlled by the CAV technique, the optical disc drive controls the recording power with the target β values changed according to the radial location in accordance with the writing conditions that are stored in advance in the PIC area as already described for the second preferred embodiment. By performing the recording power control in this manner, the write operation can be performed over the entire surface of the disc with the degree of modulation kept constant and good storage quality can be maintained. More specifically, by controlling the recording power with the target β values changed according to the radial location using the writing conditions β64 and β66 that are stored in advance in the PIC area in an x6 PCAV writing control, the write operation can be performed with the degree of modulation kept constant. By following a similar operating procedure as for any other writing speed, the optical disc drive can determine the best recording power to get the CAV control done.

EMBODIMENT 4

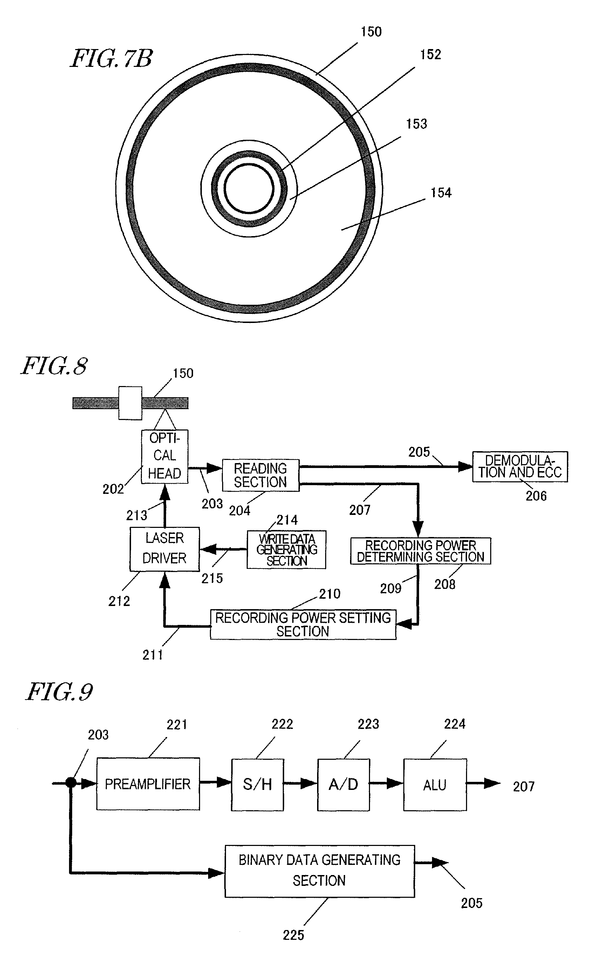

Hereinafter, a fourth preferred embodiment of the present invention will be described. First of all, the track arrangement on the optical disc of this preferred embodiment will be described. As shown in FIG. **7A,** the optical disc **150** has a number of groove tracks **151** that are arranged either spirally or concentrically. By irradiating the storage plane of the tracks **151,** marks and spaces between the marks are left, thereby writing user data there. As shown in FIG. **7B,** the tracks **151** of the optical disc **150** include: a control information storage area **152,** which is arranged in the innermost area; a test writing area **153,** which is located outside of the control information storage area **152;** and a user data storage area **304,** which is located outside of the test writing area **153.** The control information storage area **152,** the test writing area **153** and the user data storage area **154** respectively correspond to the PIC area **121,** the PCA (OPC) area **122** and the user area **130** shown in FIG. **1.**

In the control information storage area **152,** stored are recording-power-related parameters and write-waveform-related parameters. These values are stored in advance on the optical disc.

The optical disc of this preferred embodiment is adapted for 2x, 4x and 6x writing speeds. That is to say, data can be written on this optical disc at 2x, 4x and 6x writing speeds. The following Table 4 shows some pieces of the control information that is stored in the control information storage area **152.** Specifically, the control information includes pulse-position-related parameters and recording-power-related parameters. As shown in Table 4, a pulse position parameter **1001** and a recording power parameter **1004** for 2x writing, a pulse position parameter value **1002** and a recording power parameter **1008** for 4x writing, and a pulse position parameter value **1003** and a recording power parameter **1012** for 6x writing are stored as respective values recommended by the disc manufacturer.

Added to these, the optical disc of this preferred embodiment further stores recording power parameters **1004** and **1010** for performing a write operation at 4x and 6x, respectively, using the pulse position parameter **1001** for 2x writing. In addition, the optical disc further stores recording power parameter **1005** and **1011** for performing a write operation at 2x and 6x, respectively, using the pulse position parameter **1002** for 4x writing. And the optical disc further stores recording power parameters **1006** and **1009** for performing a write operation at 2x and 4x, respectively, using the pulse position parameter **1003** for 6x writing.

[Table 4]

| | Values stored on optical disc | | | |
|---|---|---|---|---|
| | Pulse position parameter | Recording power parameters | | |
| | | 2x | 4x | 6x |
| 2x | 1001 | 1004 | 1007 | 1010 |
| 4x | 1002 | 1005 | 1008 | 1011 |
| 6x | 1003 | 1006 | 1009 | 1012 |

FIG. **8** is a block diagram illustrating a configuration for an optical disc drive as a recorder according to this preferred embodiment. The optical disc drive shown in FIG. **8** includes an optical head **202,** a reading section **204,** a demodulation and ECC circuit **206,** a recording power determining section **208,** a recording power setting section **210,** a laser driver **212** and a write data generating section **214.**

The optical head **202** includes a laser light source and irradiates the tracks **151** on the optical disc **150** with a light beam, thereby writing data there. The optical head **202** also irradiates the optical disc with the light beam, thereby detecting reflected light, of which the intensity varies in a pattern representing the marks and spaces that are left on the tracks, and generating an RF signal **203** as a read signal. Then, the RF signal **203** is supplied to the reading section **204.**

As shown in FIG. **9,** the reading section **204** includes a preamplifier **221,** a sample-and-hold circuit **222,** an A/D converter **223,** an ALU **224** and a binary data generating section **225.** The RF signal **203** is supplied to the binary data generating section **225** and binarized there. The binarized RF signal **205** is then supplied to, and subjected to decoding and error correction by, the demodulation and ECC circuit **206,** thereby extracting user data.

Meanwhile, the RF signal **203** that has been supplied to the preamplifier **221** is subjected to various types of processing to determine the recording power of the light beam. That processing will be described in detail later.

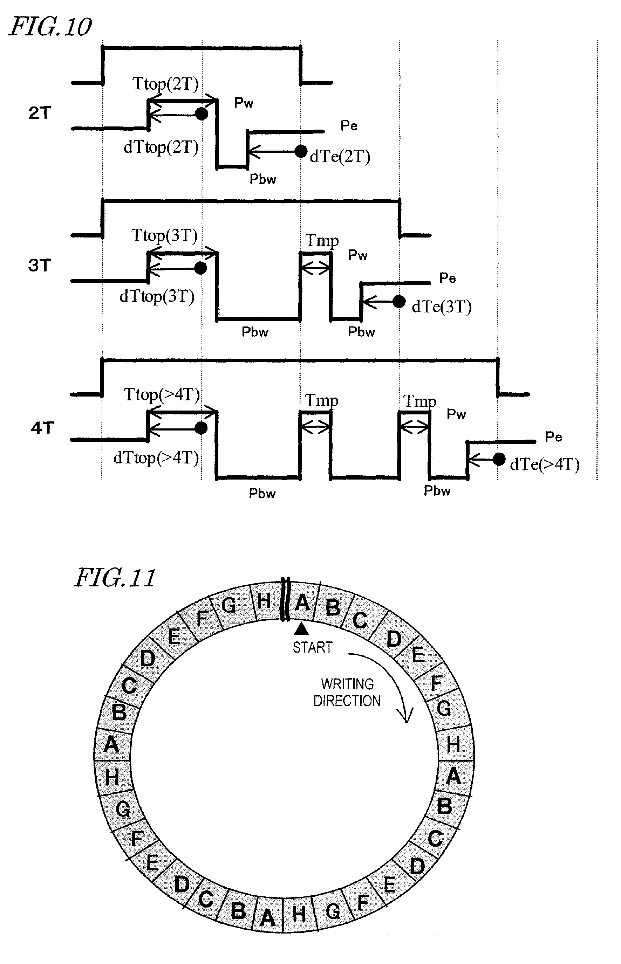

FIG. **10** shows exemplary waveforms of the light beam emitted from the optical head **202** while a write operation is performed according to this preferred embodiment. In this preferred embodiment, data that has been modulated by the run length limited (1, 7) modulation technique is supposed to be written by the mark edge recording technique. In that case, there will be marks and spaces with seven different lengths of 2T through 8T, which increase one by one on a reference period T basis from the shortest length of 2T through the longest one of 8T. It should be noted that the mark edge recording technique does not have to be adopted but any other appropriate recording technique could be used as well. In FIG. **10,** light beam waveforms for making 2T, 3T and 4T marks are shown among those various waveforms.

As shown in FIG. **10,** the irradiation power levels (i.e., the recording power parameters) of the light beam include a peak power **Pw**, a bias power (which is also called "space power **Ps"** in a write-once disc or "erase power **Pe"** in a rewritable disc but which is collectively identified by Pe in FIG. **10),** and a bottom power **Pbw.** On the other hand, pulse position related parameters include Ttop, dT$_{top}$, Tmp and dTe. A 2T mark is written with a single pulse, while a 3T mark is written with two pulses. After that, every time the mark length increases by T, the number of pulses also increases by one. Since the object of the present invention is to determine the recording power, the following description will be focused on how to determine the recording power.

In this preferred embodiment, every mark has the same peak power **Pw**, same bias power **Pe** and same bottom power **Pbw** and also has the same Tmp. Meanwhile, Ttop, dTtop and dTe are supposed to be classifiable into 2T, 3T and 4T or more, but may also be classified in any other set of groups. The parameters that determine the waveform of the light beam do not have to be the ones adopted in this preferred embodiment, either.

The following Tables 5 and 6 show examples of the pulse position parameters and recording power parameters. Specifically, these tables show examples of the pulse position parameter **1002** and the recording power parameter **1008** for performing a write operation at 4x writing speed shown in Table 4. In these Tables 5 and 6, the product of ρ 1201 and Pind1202 corresponds to the irradiation power of Pw, the product of Pw and εe corresponds to the irradiation power of Pe, and the product of Pw and εbw corresponds to the irradiation power of Pbw.

[Table 5]

| Examples of pulse position parameters **1002** | |
|---|---|
| Top (2T) | 1101 |
| dTtop (2T) | 1102 |
| dTe (2T) | 1103 |
| Ttop (3T) | 1104 |
| dTtop (3T) | 1105 |
| dTe (3T) | 1106 |
| Ttop (>4T) | 1107 |
| dTtop (>4T) | 1108 |
| dTe (>4T) | 1109 |
| Tmp | 1110 |

[Table 6]

| Examples of recording power parameters **1008** | |
|---|---|
| ρ | 1201 |

(continued)

| Examples of recording power parameters **1008** | |
|---|---|
| Pind | 1202 |
| κ | 1203 |
| n | 1204 |
| Ee | 1205 |
| Ebw | 1206 |

In an ideal writing state, when a 4x CLV write operation is performed, for example, the pulse position parameter value **1002** is set in the write data generating section **214** and the recording power parameter value **1008** is set in the recording power setting section **210**. As a result, light with the modulation waveform shown in FIG. **10** strikes the optical disc as the output **213** of the laser driver **212.**

In the same way, if a CAV write operation is performed at 4x on the inner area and at 6x on the outer area, for example, the pulse position parameter value **1002** is set in the write data generating section **214** and the recording power value **1008** is set in the recording power setting section **210** in the inner area. On the other hand, in the outer area, the pulse position parameter value **1003** is set in the write data generating section **214** and the recording power value **1012** is set in the recording power setting section **210**. The linear velocity increases as the light beam spot moves from the inner area toward the outer area. That is why a value that has been linearly interpolated between the pulse position parameter values **1002** and **1003** is set at a predetermined timing in the write data generating section **214** and a value that has been linearly interpolated between the recording power values **1008** and **1012** is set at a predetermined timing in the recording power setting section **210.**

Actually, however, there always is some individual difference between respective optical discs or optical disc drives. For that reason, even if the pulse position parameter and recording power parameter that are stored on the optical disc are used, the quality of the signal to be read or written may still decrease. That is why a test write operation needs to be performed to determine the best recording power for each individual optical disc and each individual optical disc drive. Hereinafter, its procedure will be described.

When the optical disc drive is loaded with the optical disc **150,** predetermined sorts of operations, including disc type recognition and rotation control, are performed. After that, the optical head **202** moves to the control information storage area **302** to get the control information and other pieces of information to be required to determine the recording power as will be described later. Thereafter, to set the best recording power, the optical head **202** moves to the test writing area **153.**

In determining the recording power, first, the recording power setting section **210** sets the peak power, bias power and bottom power for the laser driver **212**. Next, the write data generating section **214** sends a signal **215** to write data on one full track from a predetermined location to the laser driver **712.**

The signal to be written may be a signal in which 8T marks and 8T spaces alternate one after another continuously, for example. The write operation may be performed with the recording powers changed into eight different values **A, B, C, D, E, F, G** and **H** every time the disc makes one revolution as shown in FIG. **11.** In this case, the ratio between the peak, bias and bottom powers is supposed to be constant. Alternatively, if the same set of four different conditions is used recurrently for every round of track, a variation in tilt in the circumferential direction of the optical disc **101** can be flattened.

If the signal to be written includes a lot of signals in which 8T marks and 8T spaces appear continuously, then a sync signal, an address signal and other signals may be included in the signal to be written. Also, if a modulation method other than the run length limited (1, 7) modulation method is adopted, then a signal, including a lot of signals in which the longest marks and longest spaces for that method appear continuously, should be written. It should be noted that if the amplitude of a read signal in a situation where a signal with a constant cycle time has been written is approximately equal to the amplitude in a situation where the signal including the longest marks and spaces has been written, then the signal to be written may have any single constant cycle time.

In the preferred embodiment described above, the ratio between the peak, bias and bottom powers is supposed to be constant. However, the peak, bias and bottom powers may be defined independently of each other. For example, when the peak power is determined, the bias and bottom powers may be fixed.

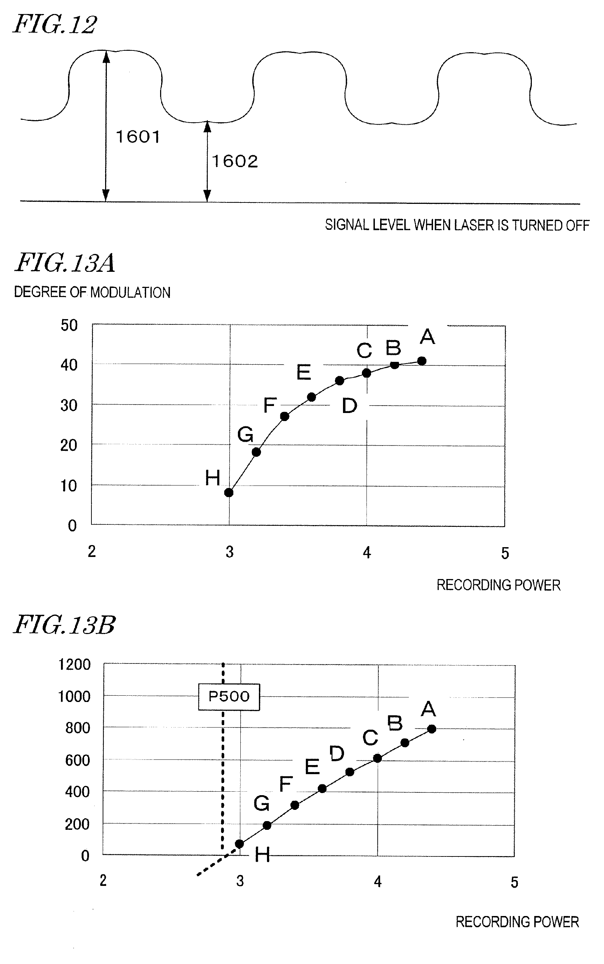

When the write operation is finished, the laser light source of the optical head **202** changes its power levels into a readout power level and scans the track on which the write operation has just been performed. And a signal **203,** of which the intensity level changes depending on whether or not there is a recording mark on the optical disc **150,** is supplied as an RF signal to the reading section **204,** in which the signal **203** is amplified by the preamplifier **221** and in which the peak and bottom values of the 8T signal are held by the sample-and-hold circuit **222.** The A/D converter **223** converts the peak and bottom values into digital values and the ALU **224** calculates the degree of modulation of the 8T signal, for example. Then, a signal **207** representing the degree of modulation is input to the recording power determining section **208.** As shown in FIG. **12,** the degree of modulation is calculated by (1601 - 1602)/1601, where 1601 denotes the peak value and 1602 denotes the bottom value. FIG. **12** shows the peak value **1601** and the bottom value **1602** of the RF signal using the waveform of the output signal of the preamplifier **221** to allow the reader to get the idea easily. The degree of modulation is calculated for each of the eight different recording powers **A, B, C, D, E, F, G** and **H.**

The recording power determining section **208** determines the best recording power based on the respective degrees of modulation of the recording powers **A, B, C, D, E, F, G** and **H.** FIG. **13A** is a graph plotting the relation between each of the recording powers and its associated degree of modulation. On the other hand, FIG. **13B** is a graph plotting the relation between each of the recording powers and the product of the square of the recording power and the degree of modulation thereof. And FIG. **13C** is a graph plotting the relation between each of the recording powers and the product of the third power of the recording power and the degree of modulation thereof.

The recording power determining section **208** compares the degree of linearity of the respective data points shown in FIG. **13B** to that of the respective data points shown in FIG. **13C,** and calculates the recording power **P500,** at which the product of the square of the recording power and the degree of modulation thereof goes zero, in the graph shown in FIG. **13B** with the higher degree of linearity. Next, the recording power determining section **208** multiplies the recording power **P500** just calculated by a predetermined constant stored on the optical disc **150** and sets the product as a signal **209** in the recording power setting section **110.**

The degree of linearity may be determined by calculating the ratios of the gradient of the line that connects together A and B to that of the line that connects together G and H in FIGS. **13B** and **13C** and selecting one of the two ratios that is closer to one. However, the degree of linearity does not have to be determined by this method. Alternatively, any other method may be adopted as long as the degrees of linearity can be compared to each other.

On a BD, Pind, $\rho$ and $\kappa$ are stored in a predetermined area such as the control information storage area. In this case, the product of $\rho$ and Pind is the recording power **Pwo** for writing user data as recommended by the manufacturer of the disc. The disc manufacturer determines Pwo and then Pind and writes an 8T signal in a range of recording powers that are 0.9 to 1.1 times as high as Pind, thereby getting the degree of modulation.

FIG. **14** is a graph plotting the relation between each of the recording powers and the product of the degree of modulation thereof and its associated recording power. By linearly approximating each plot, a recording power **Pthr,** at which the product of the recording power and the degree of modulation goes zero, is calculated and K , of which the product with Pthr becomes equal to Pind, is determined.

In this case, if the characteristic shown in FIG. **13B** is selected as a result of the test write operation and determination of the degree of linearity according to this preferred embodiment, then the recording power determining section **208** calculates the recording power **P500,** at which the product of the square of the recording power and the degree of modulation goes zero, as shown in FIG. **13B.** Then, a signal **209** representing the recording power **Pw1** given by the following Equation (3) may be set as a recording power for writing user data in the recording power setting section **110:**

$$Pw1 = P500 \times (-1/\kappa + 2) \times \rho \qquad (3)$$

On the other hand, if the characteristic shown in FIG. **13C** is selected as a result of the determination of the degree of linearity, then the recording power determining section **208** calculates the recording power **P600,** at which the product of the third power of the recording power and the degree of modulation goes zero, as shown in FIG. **13C.** Then, a signal **209** representing the recording power **Pw1** given by the following Equation (4) may be set as a recording power for writing user data in the recording power setting section **110:**

$$Pw1 = P600 \times (3\kappa - 2)/(2\kappa - 1) \times \rho \qquad (4)$$

The following Table 7 shows the recording power values that have been calculated by performing a test write operation as described above. For example, 1705 denotes the recording power value for performing a write operation at 4x that has been calculated by performing a test write operation at the 4x writing speed using the 4x pulse position parameter value **1002.** After the test write operation is done, this value may be stored on either the optical disc or the optical disc drive. If such an appropriate recording power that has been determined by performing a test write operation is stored in a predetermined area on the optical disc or optical disc drive, then the write operation can be performed with the appropriate recording power next time without performing a test write operation all over again.

Such a recording power has been determined as a result of the test write operation with the property of the individual optical disc or optical disc drive taken into account. That is why the recording power is the best one for that optical disc or optical disc drive. And by writing data with the recording power determined that way, good storage quality can be ensured for the information that has been written on the optical disc.

[Table 7]

| Pulse position parameter value | | Recording power value (determined by test writing or calculated) | | |
|---|---|---|---|---|
| | | 2x | 4x | 6x |
| 2x | 1001 | 1701 | 1704 | 1707 |
| 4x | 1002 | 1702 | 1705 | 1708 |
| 6x | 1002 | 1703 | 1706 | 1709 |

Hereinafter, it will be described how to calculate the recording power in a situation where a write operation is performed at 6x writing speed on the outer area. In this preferred embodiment, suppose a CLV write operation can be performed over the entire storage area of the disc at the 4x writing speed. As already described for the first and second preferred embodiments, the optical disc **150** has a test writing area **153** that ensures good quality only in the inner area, and therefore, a test write operation cannot be performed on the optical disc **150** at 6x writing speed. That is why according to this preferred embodiment, a test write operation is performed at 4x writing speed as shown in Table 7, and using the recording power **1705** that has been determined based on a result of the test write operation and the recording powers **1008** and **1012** that are stored either on the optical disc or in the memory of the information recorder, the recording power **1709** for writing user data at 6x writing speed is calculated by Equation (5).

In this case, the recording power **1705** is stored in either the optical disc **150** or the optical disc drive, and has been determined by the method described above based on a result of the test write operation that has been performed at 4x writing speed using the 4x pulse position parameter value **1002** recommended by the media manufacturer. Also, the recording power **1008** is recommended by the media manufacturer as a recording power to perform a write operation at 4x linear velocity using the 4x pulse position parameter value **1002** specified by the media manufacturer. Furthermore, the recording power **1012** is recommended by the media manufacturer as a recording power to perform a write operation at 6x writing speed using the 6x pulse position parameter value **1003** specified by the media manufacturer.

$$1709 = 1012 \times (1705/1008) \tag{5}$$

According to Equation (5), the ratio of a recording status parameter, with which the user performs a write operation at the 4x writing speed, to a recording status parameter, with which the media manufacturer performed a write operation at the 4x writing speed, is calculated, and then is multiplied by another recording status parameter, with which the media manufacturer performed a write operation at the 6x writing speed, thereby estimating the recording power for the user to perform a write operation at the 6x writing speed. As a result, even if the write operation should be performed with a higher recording power than usual because of a variation in a disc property due to deposition of dust on the lens or some manufacturing error, for example, a test write operation just needs to be performed at the 4x writing speed and the recording power for performing a write operation at the 6x writing speed may be calculated by Equation (5). Then, the best recording power can still be determined even without actually performing a test write operation at 6x.

In the preferred embodiment described above, the 4x writing speed is supposed to be the highest allowable linear velocity to perform a CLV write operation and 6x is supposed to be the writing speed to perform a CAV write operation on the outer area. However, two writing speeds do not always have to be selected in this combination. Alternatively, the present invention is applicable to any other combination of writing speeds if almost the same pulse position parameters are used and if the ratio of the recording power that has been determined by performing a test write operation at an actually adoptable writing speed to a known recording power for the same writing speed is multiplied by another known recording power for a writing speed to write user data.

That is to say, a first pulse position parameter value, a first recording power value to write data at a first writing speed using the first pulse position parameter value, a second pulse position parameter value, and a second recording power value to write data at a second writing speed, which is lower than the first writing speed, using the second pulse position parameter value need to be stored on either the optical disc or the optical disc drive. In that case, the first recording power to write data at the first writing speed can be calculated based on the second recording power with which a test write operation has been performed at the second writing speed with the first and second recording power values and the second pulse position parameter value. As a result, the first recording power for writing data at the first writing speed can be estimated accurately even without actually performing a test write operation at the first writing speed.

Alternatively, the recording power **1709** for writing user data at 6x may be calculated by the following Equation (6). To calculate the recording power **1709** by Equation (6), the recording power **1706** with which a test write operation has been performed at 4x, and the recording power values **1009** and **1012** that are stored on either the optical disc or the optical disc drive are used. In this case, the recording power **1706** is stored on either the optical disc **150** or the optical disc drive and has been determined by the method described above based on a result of the test write operation that has been performed at 4x writing speed using the 6x pulse position parameter value **1003** recommended by the media manufacturer.

Also, the recording power **1009** is recommended by the media manufacturer as a recording power to perform a write operation at 4x linear velocity using the 6x pulse position parameter value **1003** specified by the media manufacturer. Furthermore, the recording power **1012** is recommended by the media manufacturer as a recording power to perform a write operation at 6x writing speed using the 6x pulse position parameter value **1003** specified by the media manufacturer.

$$1709 = 1012 \times (1706/1009) \tag{6}$$

According to Equation (6), the ratio of a recording status parameter, with which the user performs a write operation at the 4x writing speed, to a recording status parameter, with which the media manufacturer performed a write operation at the 4x writing speed, is calculated, and then is multiplied by another recording status parameter, with which the media manufacturer performed a write operation at the 6x writing speed, thereby estimating the recording power for the user to perform a write operation at the 6x writing speed. As a result, even if dust is deposited on the lens, for example, a test write operation just needs to be performed at the 4x linear velocity and the recording power for performing a write operation at the 6x linear velocity may be calculated properly.

In the preferred embodiment described above, the 4x writing speed is supposed to be the highest allowable linear velocity to perform a CLV write operation and 6x is supposed to be the writing speed to perform a CAV write operation on the outer area. However, two writing speeds do not always have to be selected in this combination. Alternatively, the present invention is applicable to any other combination of writing speeds if almost the same pulse position parameters are used and if the ratio of the recording power that has been determined by performing a test write operation at an actually adoptable writing speed to a known recording power for the same writing speed is multiplied by another known recording power for a writing speed to write user data.

That is to say, a first pulse position parameter value, a first recording power value to write data at a first writing speed using the first pulse position parameter value, and a second recording power value to write data at a second writing speed, which is lower than the first writing speed, using the first pulse position parameter value need to be stored on either the optical disc or the optical disc drive. In that case, the first recording power to write data at the first writing speed can be calculated based on the second recording power with which a test write operation has been performed at the second writing speed with the first and second recording power values and the first pulse position parameter value. As a result, the first recording power for writing data at the first writing speed can be estimated accurately even without actually performing a test write operation at the first writing speed.

Still alternatively, the recording power **1709** for writing user data at 6x may be calculated by the following Equation (7). To calculate the recording power **1709** by Equation (7), the recording power **1703** with which a test write operation has been performed at 2x and the recording power **1706** with which a test write operation has been performed at 4x are used. In this case, the recording power values **1703** and **1706** are stored on either the optical disc **150** or the optical disc drive and have been determined by the method described above based on a result of the test write operations that have been performed at 2x and 4x writing speeds, respectively, using the 6x pulse position parameter value 1003 recommended by the media manufacturer. In Equation (7), to generalize the writing speed, the 4x writing speed is identified by V4 and the 6x writing speed is identified by V6 (where V6 > V4). The writing speed may be represented by a linear velocity, for example.

$$1709 = (1706 \times 1706/1703) \times \sqrt{(V6 \times V2)/V4} \tag{7}$$

According to Equation (7), the recording power required is supposed to increase proportionally to the halfth power of the linear velocity ratio, a factor of proportionality is calculated based on two recording status parameters with which the user performs a write operation at 2x and 4x writing speeds, respectively, and the recording power with which the user needs to perform a write operation at 6x writing speed is estimated using that factor of proportionality.

In this example, the recording power is calculated by Equation (7). However, as long as the recording power at a writing speed, at which the user data is going to be written, can be calculated based on a result of a test write operation that has actually been carried out at multiple writing speeds, any other mathematical equation may be adopted as well.

Also, the 4x writing speed is supposed to be the highest allowable linear velocity to perform a CLV write operation and 6x is supposed to be the writing speed to perform a CAV write operation on the outer area. However, two writing speeds do not always have to be selected in this combination. Alternatively, the present invention is applicable to any other combination of writing speeds if almost the same pulse position parameters are used and if the recording power at a writing speed, at which the user data is going to be written, can be calculated based on a result of a test write operation that has actually been carried out at multiple writing speeds.

If this calculating method is adopted, only a first pulse position parameter value to write data at a first writing speed needs to be stored on either the optical disc or the optical disc drive. In that case, the first recording power to write data at the first writing speed can be calculated based on a second recording power with which a test write operation has been performed at a second writing speed, which is lower than the first writing speed, and a third recording power with which a test write operation has been performed at a third writing speed, which is lower than the second writing speed, using the first pulse position parameter in both cases.

In the preferred embodiments described above, when the recording power is determined by performing a test write operation, the first recording power is calculated based on either a first type of correlation between multiple recording powers and the products of the square of each of the recording powers and the degree of modulation at that power or a second type of correlation between the multiple recording powers and the products of the third power of each of the recording powers and the degree of modulation at that power, whichever has the higher degree of linearity. However, if the degree of linearity increases with any different power other than two or three due to a difference in the structure of the optical disc or the property of the recording film, then the power may also be an integer or real number other than two or three.

Furthermore, in the preferred embodiments described above, the degrees of linearity of those two types of correlation represented with two different powers are determined. However, the degrees of linearity may also be determined on three or more powers. For example, the degree of linearity may also be determined by the degree of correlation between the recording power, the degree of modulation, and the second, two and a halfth, and third powers of the recording power.

Optionally, an n value with the highest degree of linearity may be stored in a predetermined area on the optical disc. By storing that value in the predetermined area, when the recording power needs to be determined again, the processing of determining the degree of linearity can be omitted by using the n values stored. As a result, the recording power can be determined quickly.

Alternatively, the n value with the highest degree of linearity may also be stored in the memory of an information recorder. If there are either optical discs produced by multiple different manufacturers or optical discs produced by the same manufacturer but belonging to multiple different lots, then the information recorder may include means for recognizing the same disc or the same lot. In that case, when the recording power for the same disc or an optical disc belonging to the same lot needs to be determined next time, the processing of determining the degree of linearity can be omitted by using the n value that is stored in the memory. As a result, the recording power can be determined quickly.

In the fourth preferred embodiment described above, examples of write waveforms have been described with reference to FIG. 10. However, the present invention is not limited to only those write waveforms. Hereinafter, alternative write waveforms that can also be used in the present invention will be described briefly.

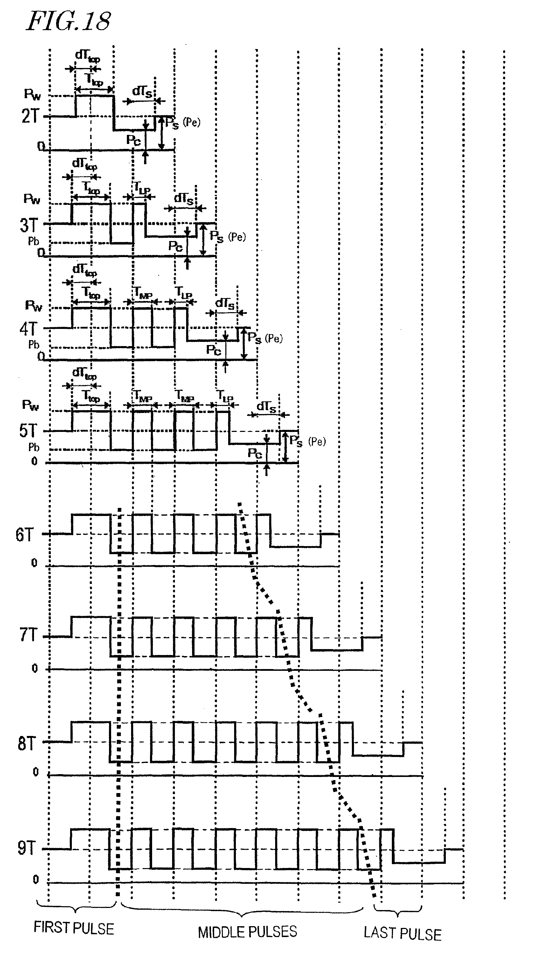

Generally speaking, a write operation is performed on an optical disc by modulating data to be written (i.e., source data) following a predetermined modulation rule to generate multiple modulated recording code patterns, irradiating the disc with pulsed light beams, and making recording marks and spaces (to be left between the recording marks), each having a length corresponding to that of an associated one of the multiple modulated recording code patterns. Hereinafter, three examples will be given to describe on what write waveforms those pulsed light beams are generated. In each of FIGS. **18** through **20,** the shortest mark is supposed to have a length of 2T (where T is one reference cycle time of a reference clock and modulation). However, the shortest mark does not have to have a length of 2T.

FIG. **18** illustrates a first type of write waveforms. Each write waveform of this first type has a multi-pulse-type strategy (i.e., includes multiple pulses), and consists of a first pulse (with a width $T_{top}$) to be arranged earlier than any other one of the multiple pulses, a last pulse (with a width $T_{LP}$) to be arranged at the very last, and middle pulses (with a width $T_{MP}$) interposed between the first and last pulses. Among the recording-power-related parameters, $P_w$ represents the recording power, $P_b$ represents the bottom power, $P_c$ represents the cooling power, and $P_s$ (Pe) represents the bias power. More specifically, Ps represents a space power in a write-once disc and Pe represents an erase power in a rewritable disc.

The write waveform to record the shortest mark (2T) has no last pulse or middle pulses. The write waveform to record the second shortest mark (3T) has no middle pulses. The middle pulses start to be included in the write waveform to record the third shortest mark (4T). And every time the length increases by 1T, the number of middle pulses increases by one. This first type of write waveform is partly **characterized in that** a write waveform to record an nT mark (where n is a natural number) has (n-1) pulses.

In this case, the various types of parameters may be defined by classifying the lengths of the recording marks and their adjacent spaces in the following manner.

First of all, $dT_{top}$ and $T_{top}$ representing the leading edge position and width of the first pulse may be defined by classifying the lengths of the recording marks into the three categories of "2T", "3T" and "4T or more" and/or classifying the lengths of adjacent preceding spaces into the four categories of "2T", "3T", "4T" and "5T or more".

Also, $T_{LP}$ representing the width of the last pulse may be defined by classifying the lengths of the recording marks into the two categories of "3T" and "4T or more".

Furthermore, dTs marking the end point of the cooling power level Pc (or the start point of the bias power level Ps or Pe) may be defined by classifying the lengths of the recording marks into the three categories of "2T", "3T" and "4T or more".

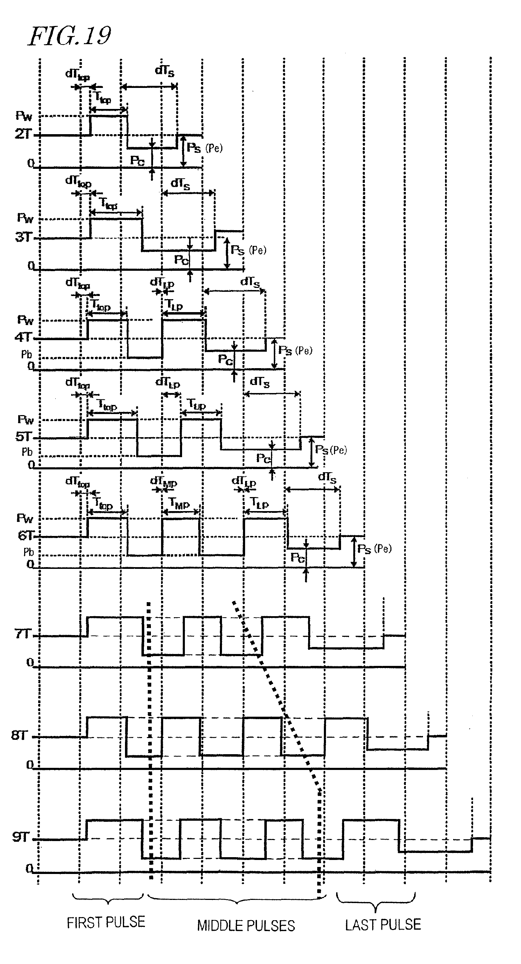

FIG. **19** illustrates a second type of write waveforms. Each write waveform of this second type also has a multi-pulse-type strategy. The write waveforms to record the shortest mark (2T) and the second shortest mark (3T) have no last pulse or middle pulses. The write waveforms to record the third shortest mark (4T) and the fourth shortest mark (5T) have no middle pulses. The middle pulses start to be included in the write waveform to record the fifth shortest mark (6T). And every time the length increases by 2T, the number of middle pulses increases by one. This second type of write waveform is partly **characterized in that** a write waveform to record an mT mark (where m is a natural number) is the quotient of (m÷2).

In this case, the various types of parameters may be defined by classifying the lengths of the recording marks in the following manner.

First of all, $dT_{top}$ and $T_{top}$ representing the leading edge position and width of the first pulse may be defined by classifying the lengths of the recording marks into the four categories of "2T", "3T", "4T, 6T or 8T" and "5T, 7T or 9T".

Also, $dT_{MP}$ representing the leading edge position of the middle pulses may be defined by classifying the lengths of the recording marks into the two categories of "6T or 8T" and "7T or 9T". Furthermore, the leading edge position may agree with that of the reference clock pulse in the former category and may shift from that of the reference clock pulse by T/2 in the latter category.

Furthermore, $dT_{LP}$ and $T_{LP}$ representing the position and width of the leading edge of the last pulse may be defined by classifying the lengths of the recording marks into the two categories of "4T, 6T or 8T" and "5T, 7T or 9T". Optionally, the leading edge position $dT_{LP}$ may agree with that of the reference clock pulse in the former category and may shift from that of the reference clock pulse by T/2 in the latter category.

Furthermore, dTs marking the end point of the cooling power level Pc (or the start point of the bias power level Ps or Pe) may be defined by classifying the lengths of the recording marks into the four categories of "2T", "3T", "4T, 6T or 8T" and "5T, 7T or 9T".

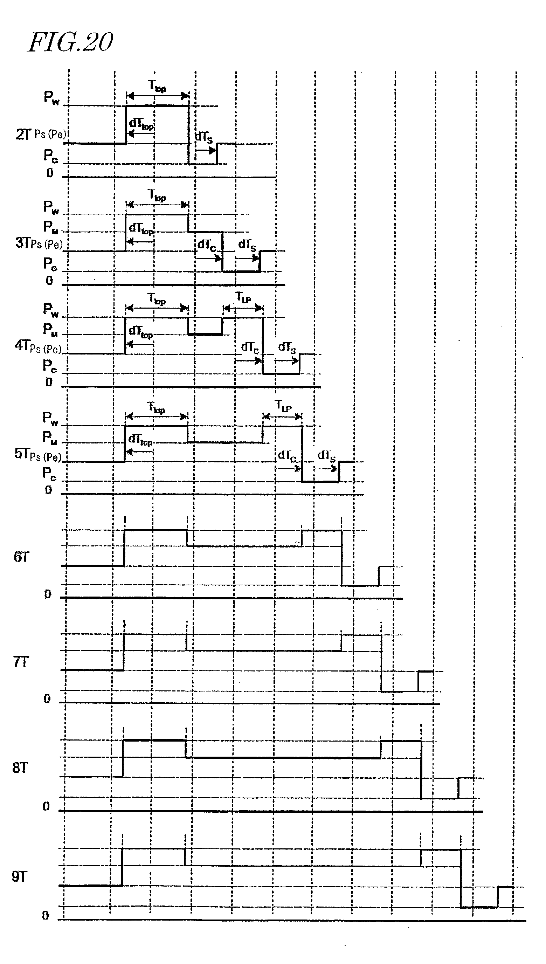

FIG. **20** illustrates a third type of write waveforms. Unlike the first and second types of write waveforms with the multi-pulse-type strategy, each waveform of this third type is shaped such that the power level between pulses, for which the recording powers **Pw** are set, does not decrease to the bottom power **Pb** but is maintained at a certain intermediate power level **Pm.** That is to say, the write waveform of this third type has a castle-type strategy, and also consists of a first pulse (with a width **$T_{top}$**) to be arranged at the top, a last pulse (with a width **$T_{LP}$**) to be arranged at the very last, and an intermediate pulse interposed between the first and last pulses. Among the recording-power-related parameters, $P_w$ represents the recording power, $P_m$ represents the intermediate power, $P_c$ represents the cooling power, and $P_s$ (Pe) represents the bias power. More specifically, $P_s$ represents a space power in a write-once disc and Pe represents an erase power in a rewritable disc.

The write waveform to record the shortest mark (2T) has no last pulse or intermediate pulse. The write waveform to record the second shortest mark (3T) have no last pulse. The last and intermediate pulses start to be both included in the write waveform to record the third shortest mark (4T). In each write waveform to make a recording mark of 3T or more, the end point of the first pulse agrees with the start point of the intermediate pulse. And in each write waveform to make a recording mark of 4T or more, the end point of the intermediate pulse agrees with the start point of the last pulse.

Stated otherwise, such a castle type strategy may also be regarded as a write waveform with the following shape. Specifically, in the castle type strategy, the write waveform to make a recording mark consists of only one write pulse and has a shape that includes a first interval that begins with the leading edge of the write pulse and that defines a first power level (i.e., the recording power **Pw),** a second interval that begins with the end point of the first interval and that defines a second power level (i.e., the intermediate power **Pm)** that is lower than the first power level, and a third interval that begins with the end point of the second interval and that defines a power level that is higher than the second power level but is as high as the first power level (i.e., the recording power **Pw)**. In the example illustrated in FIG. **20,** the power levels of the first and third intervals are supposed to equal to each other to avoid complicating the description overly. Naturally, however, mutually different levels may be set for these two intervals, too. In any case, in the foregoing description, a portion of this write pulse for which the power level of the first interval is defined is called a "first pulse", another portion of the write pulse for which the power level of the second interval is defined an "intermediate pulse", and the other portion of the write pulse for which the power level of the third interval is defined a "last pulse". Thus, this naming (i.e., the first, intermediate and last pulses) will be used continuously for the rest of the description.

In this case, the various types of parameters may be defined by classifying the lengths of the recording marks and their adjacent spaces in the following manner.

First of all, $dT_{top}$ and $T_{top}$ representing the leading edge position and width of the first pulse may be defined by classifying the lengths of the recording marks into the three categories of "2T", "3T" and "4T or more" and/or classifying the lengths of adjacent preceding spaces into the three categories of "2T", "3T", and "4T or more".

Also, $T_{LP}$ representing the width of the last pulse may be defined by regarding the lengths of the recording marks to be "4T or more". That is to say, every recording mark including the last pulse and having a length of 4T or more may have the same width.

Furthermore, $dT_c$ marking the start point of the cooling power level $P_c$ may be defined by classifying the lengths of the recording marks into the three categories of "3T", "4T" and "5T or more".

Furthermore, $dT_s$ marking the end point of the cooling power level $P_c$ (i.e., the start point of the bias power level $P_s$ or Pe) may be defined by classifying the lengths of the recording marks into the three categories of "2T", "3T" and "4T or more".

It should be noted that when each pulse and/or each power level are defined, the position and width thereof could be adjusted with a step of T/16.

As for the relation between these types of write waveforms and writing speeds, it could be said that the second type of write waveform is more suitable for high-speed writing than the first type and that the third type of write waveform is more suitable for high-speed writing than the second type. This is because the second type of write waveform would require more frequent application of the recording power **Pw** (i.e., would take a greater total amount of time to make the pulses rise and fall) than the third type of write waveform, thus delaying the high-speed processing more significantly. The same can be said about the first and second types of write waveforms. That is to say, the first type of write waveform would need more frequent pulse applications and a longer overall rise and fall time than the second type. Considering this point, the writing conditions may be stored on an optical disc in the following manner.

First of all, if writing conditions for a 1x writing speed (i.e., the standard writing speed) are stored, parameters about the first type of write waveform may be stored as indispensable ones but parameters about the second type of write waveform could be stored optionally. Also, if the writing speed is 1x, the third type of write waveform may not be used, for example.

Also, if writing conditions for a 2x writing speed (i.e., twice as high as the standard writing speed) are stored, parameters about the third and/or first type(s) of write waveform(s) could be stored optionally. In that case, parameters about the second type of write waveform could be stored optionally but parameters about at least one of the first and second types of write waveforms should be stored as indispensable ones. As the 2x writing speed cannot be said to be a high speed (i.e., around and over 4x), and therefore, the castle type strategy does not always have to be adopted. Nevertheless, 2x is still faster than the standard speed. That is why if the multi-pulse type strategy must be adopted, then a write operation can not always be performed appropriately depending on the property of the given disc or the degree of compatibility between the disc and the drive. For that reason, if parameters about the castle type are stored optionally, if it does not matter whether it is a multi-pulse type or not (i.e., parameters about each of the first and second types of waveforms may be stored optionally) but if parameters about at least one of the two types must be stored, then the disc manufacturing process and the drive design process can be carried out more flexibly.

Furthermore, if writing conditions for a 4x writing speed (i.e., four times as high as the standard writing speed) are stored, parameters about the third type of write waveform may be stored as indispensable ones. Also, if the writing speed is 4x, the first and second types of write waveforms may not be used, for example. This is because if the writing speed is as high as 4x, it would be difficult to generate a number of middle pulses finely due to a limit in actual implementation, considering the total amount of rise and fall times of the laser pulses applied.

Furthermore, if writing conditions for a 6x writing speed (i.e., six times as high as the standard writing speed) are stored, parameters about the third type of write waveform may be stored as indispensable ones as in the 4x writing speed. But the first and second types of write waveforms may not be used, for example.

Furthermore, if writing conditions for an 8x or higher writing speed are stored, the same rule as the 4x and 6x writing speeds may be applied. That is to say, parameters about the third type of write waveform may be stored as indispensable ones but the first and second types of write waveforms may not be used, for example.

On top of that, when those writing conditions are stored, the contents to be stored may or may not be the same depending on whether the given disc is an HTL one (i.e., having a lower reflectance in its recorded portions than in its unrecorded portions) or an LTH one (i.e., having a higher reflectance in its recorded portions than in its unrecorded portions).

Hereinafter, a BD, which has been regarded in the foregoing description as an exemplary optical disc to which the present invention is applicable, will be described in further detail. Examples of BDs include a BD-R (write-once Blu-ray Disc), a BD-RE (rewritable Blu-ray Disc) and a BD-ROM (read-only Blu-ray Disc). Main optical constants and physical formats for Blu-ray Discs are disclosed in "Blu-ray Disc Reader" (published by Ohmsha, Ltd.) and on White Paper at the website of Blu-ray Association (http://www.blu-raydisc.com), for example.

Specifically, as for a BD, an objective lens for a laser beam with a wavelength of 405 nm (which may fall within the range of 400 nm to 410 nm supposing the tolerance of errors is $\pm$ 5 nm) and with an NA of 0.85 (which may fall within the range of 0.84 to 0.86 supposing the tolerance of errors is $\pm$0.01) is used. A BD has a track pitch of 0.32 $\mu$m and has one or two storage layers. A BD has a single-sided single-layer or a single-sided dual-layer structure on the laser beam incoming side, and its storage plane or storage layer is located at a depth of 75 $\mu$m to 100 $\mu$m as measured from the surface of the protective coating of the BD. A write signal is supposed to be modulated by 17PP modulation technique. Recording marks are supposed to have the shortest mark length of 0.149 $\mu$m (which is the length of a 2T mark), i.e., a channel bit length T of 74.50 nm. The BD has a storage capacity of 25 GB (more exactly, 25.025 GB) if it is a single-sided, single-layer disc but has a storage capacity of 50 GB (more exactly, 50.050 GB) if it is a single-sided, dual-layer disc. The channel clock frequency is supposed to be 66 MHz (i.e., 66.000 Mbit/s) at a standard BD transfer rate (1X), 264 MHz (i.e., 264.000 Mbit/s) at BD 4x transfer rate, 396 MHz (i.e., 396.000 Mbit/s) at BD 6x transfer rate, and 528 MHz (i.e., 528.000 Mbit/s) at BD 8X transfer rate. And the standard linear velocity (which will also be referred to herein as "reference linear velocity" or "1X") is supposed to be 4.917 m/sec. The 2x, 4x, 6x and 8x linear velocities are 9.834 m/sec, 19.668 m/sec, 29.502 m/sec, and 39.336 m/sec, respectively. A linear velocity higher than the standard linear velocity is normally a positive integral number of times as high as the standard linear velocity. But the factor does not have to be an integer but may also be a positive real number. Optionally, a linear velocity that is lower than the standard linear velocity (such as a 0.5x linear velocity) may also be defined.

As for the thickness of the protective coating (cover layer), to minimize the influence of spot distortion due to either a decrease in focal length with an increase in numerical aperture or the tilt, the protective coating may have its thickness reduced. For example, if the medium has an overall thickness of approximately 1.2 mm, the protective coating may have a thickness of 10 $\mu$m to 200 $\mu$m. More specifically, a single-layer disc may include a transparent protective coating with a thickness of approximately 0.1 mm and a substrate with a thickness of approximately 1.1 mm. On the other hand, a dual-layer disc may include a protective coating with a thickness of approximately 0.075 mm, a spacer layer with a thickness of approximately 0.025 mm and a substrate with a thickness of approximately 1.1 mm. If the disc has three or more storage layers, the protective coating and/or the spacer layer will be even thinner.

For example, supposing the optical disc is a single-sided disc, from/on which information is read and/or written by having a laser beam incident on the protective coating side, if two or more storage layers need to be provided, then there are multiple storage layers between the substrate and the protective coating. In that case, the multilayer structure may be defined as follows. Specifically, a reference layer L0 may be arranged at the deepest level that is located at a predetermined depth from the light incoming surface. Multiple storage layers L1, L2, ... and Ln may be stacked one upon the other from over the reference layer toward the light incoming surface. And the depth of the reference layer as measured from the light incoming surface in the multi-layer disc may be equal to the depth (e.g., approximately 0.1 mm) of the only storage layer of a single-layer disc as measured from the light incoming surface. If the depth of the deepest layer is constant irrespective of the number of storage layers stacked, compatibility can be ensured in accessing the reference layer. In addition, even if the number of storage layers stacked increases, the influence of tilt will not increase. This is because although the deepest layer is affected by tilt most, the depth of the deepest layer does not increase in this case even if the number of storage layers stacked is increased. Added to that, if the management information, control information and other sorts of information about the medium are stored at least on that reference layer L0, compatibility is also ensured when those pieces of information are read.

As for the scanning direction or beam spot moving direction, the optical disc may be either a parallel path type or an opposite path type. In a disc of the parallel path type, the data area is scanned in the same direction on every layer, i.e., from the innermost area toward the outermost area or vice versa. On the other hand, in a disc of the opposite path type, the scanning directions are changed into the opposite one every time the layers to scan are changed. For example, if the reference layer L0 is scanned from the innermost area toward the outermost area (which direction will be simply referred to herein as "outward"), then the L1 layer is scanned from outermost area toward the innermost area (which direction will be simply referred to herein as "inward"), the L2 layer is scanned outward, and so forth. That is to say, the Lm layer (where m is either zero or an even number) may be scanned outward and the Lm+1 layer may be scanned inward. Conversely, the Lm layer (where m is either zero or an even number) may be scanned inward and the Lm+1 layer may be scanned outward.

Furthermore, if grooves are cut on the medium, the medium comes to have groove portions and land portion between the groove portions. That is why data can be written in various manners, e.g., only on groove portions, only on land portions, or both on groove and land portions. In this case, a method of writing data on portions (i.e., either groove portions or land portions) that are raised as viewed from under the light incoming surface is called "On-Groove" writing. On the other hand, a method of writing data on portions that are depressed as viewed from under the light incoming surface is called "In-Groove" writing. According to the present invention, at least one of these two writing methods may be adopted arbitrarily. That is to say, only the On-Groove writing or only the In-Groove writing should be adopted, or one of these two methods could be used selectively.

If one of these two writing methods needs to be permitted selectively, writing method specifying information, indicating which of the two writing methods (i.e., the On-Groove writing or In-Groove writing) should be adopted for the medium, may be written on the medium. As for a multilayer medium, the writing method specifying information for the respective layers may be stored. In that case, the writing method specifying information for the respective layers may be stored collectively in the reference layer (which could be the deepest (L0) or shallowest layer as viewed from under the light incoming surface or the layer to be accessed earlier than any other layer during a disc loading process). Alternatively, only an associated piece of writing method specifying information may be stored in each layer. Still alternatively, the writing method specifying information for all layers could be stored on each and every layer.

Also, the writing method specifying information could be stored in the BCA (burst cutting area) or a disc information area or superposed on the wobbled groove. The disc information area is located inside and/or outside of the data storage area and used to store mainly control information. The disc information area is a read-only area and may have a broader track pitch than the data storage area. The writing method specifying information could be stored in one, any two, or even all, of these areas and portions.

Furthermore, the direction in which the groove starts wobbling for the very first time according to the On-Groove writing method may be opposite to the one according to the In-Groove writing method. That is to say, if the groove starts to wobble inward (i.e., toward the center of the disc) according to the On-Groove writing method, then the groove should start to wobble outward according to the In-Groove writing method. Alternatively, if the groove starts to wobble outward according to the On-Groove writing method, then the groove should start to wobble inward according to the In-Groove writing method. In this manner, by getting the groove to start wobbling in mutually opposite directions between the On-Groove and In-Groove writing methods, the polarity of tracking can be the same, no matter which of these two methods is adopted. This is because although a write operation is performed on the raised portion according to the On-Groove writing method as viewed from under the light incoming surface, a write operation is performed on the depressed portion according to the In-Groove writing method as viewed from under the light incoming surface. That is why supposing the groove depths are the same between these two methods, their tracking polarities will be opposite to each other. Thus, if the groove is supposed to start wobbling in mutually opposite directions between these two methods, then their tracking polarities should be the same.

The recording film of an optical disc may have the following two different properties, which are determined by the reflectances of recorded and unrecorded portions thereof. Specifically, if the unrecorded portion has a higher reflectance than the recorded portion, then the recording film has high-to-low (H to L) property. On the other hand, if the unrecorded portion has a lower reflectance than the recorded portion, then the recording film has low-to-high (L to H) property. According to the present invention, at least one of these two recording film properties may be adopted arbitrarily. That is to say, the recording film of a given medium may have only the H to L property or only the L to H property. Or the recording film could permit one of these two properties selectively.

If one of these two properties needs to be permitted selectively, recording film property specifying information, indicating which of the two properties the recording film should have (i.e., either H to L or L to H), may be written on the medium. As for a multilayer medium, the recording film property specifying information for the respective layers needs to be stored. In that case, the recording film property specifying information for the respective layers may be stored collectively in the reference layer (which could be the deepest (L0) or shallowest layer as viewed from under the light incoming surface or the layer to be accessed earlier than any other layer during a disc loading process). Alternatively, only an associated piece of recording film property specifying information may be stored in each layer. Still alternatively, the recording film property specifying information for all layers could be stored on each and every layer.

Also, the recording film property specifying information could be stored in the BCA (burst cutting area) or a disc information area or superposed on the wobbled groove. The disc information area is located inside and/or outside of the data storage area and used to store mainly control information. The disc information area is a read-only area and may have a broader track pitch than the data storage area. The recording film property specifying information could be stored in one, any two, or even all, of these areas and portions.

The respective components of the optical disc drive of the present invention are typically implemented as an LSI as a type of an integrated circuit. On the other hand, the first through fourth preferred embodiments described above, i.e., the procedures for carrying out the writing method of the present invention, may be stored as a computer readable program (i.e., a piece of firmware) on the LSI. Those components of the optical disc drive may be integrated together into a single chip either fully or just partially. Although the integrated circuit is called an "LSI" in the foregoing description, the integrated circuit may be called an IC, an LSI, a super LSI or an ultra LSI depending on the number of devices that are integrated together per unit area. The integrated circuit does not have to be an LSI but may also be implemented as a dedicated circuit or a general-purpose processor. Optionally, after an LSI has been fabricated, a programmable FPGA (field programmable gate array) or a reconfigurable processor in which the connection or setting of circuit cells inside the LSI are changeable may be adopted.

As another possibility, a novel integrated circuit technology to replace LSIs could be developed in the near future as a result of advancement of the semiconductor technology or any other derivative technology. In that case, the functional blocks could be integrated together by that novel technology. For example, the functional blocks could be integrated together as bio elements by utilizing some biotechnology.

## INDUSTRIAL APPLICABILITY

The optical information writing method of the present invention is effectively applicable to performing a high speed write operation on an optical disc and can be used particularly effectively to determine the recording power at such a linear velocity that is too high to perform a test write operation on the inner test writing area due to the limit of the rotational frequency of the motor.

## Claims

1. An information storage medium, which is adapted for multiple different writing speeds and on which writing conditions associated with each of the multiple writing speeds are stored in advance,
   wherein the writing conditions include:

   a recording-power-related parameter and a write-waveform-related parameter, which are associated with each particular writing speed to perform a write operation at the particular writing speed; and
   another recording-power-related parameter for performing a write operation at a different writing speed other than the particular one using the recording-power-related parameter for performing the write operation at the particular writing speed.

2. The information storage medium of claim 1, wherein the different writing speed other than the particular one is lower than the particular writing speed.

3. The information storage medium of claim 1 or 2, wherein the multiple writing speeds include two speeds that are respectively four and six times as high as a standard writing speed.

4. The storage medium of any of claims 1 to 3, wherein each of the recording-power-related parameter and the another recording-power-related parameter includes at least one target $\beta$ value.

5. The storage medium of claim 4, wherein the respective target $\beta$ values are defined such that signals generated by scanning recorded areas have substantially equal degrees of modulation.

6. The storage medium of any of claims 1 to 5, wherein the information storage medium has a BCA area or a PIC area and wherein the writing conditions are stored in either the BCA area or the PIC area.

7. A recorder for performing a write operation on a storage medium, which is adapted for multiple different writing speeds and on which writing conditions associated with each of the multiple writing speeds are stored in advance, with the best recording power,
   wherein the writing conditions include a parameter that defines a target for the recording power associated with each said writing speed, and
   wherein the recorder controls the recording power by calculating the target for the recording power associated with each said writing speed using the parameter such that signals generated by scanning recorded areas have substantially equal degrees of modulation.

8. The recorder of claim 7, wherein the parameter that defines the target for the recording power associated with each said writing speed is $\beta$.

9. The recorder of claim 7 or 8, wherein the parameter that defines the target for the recording power associated with each said writing speed is adapted for only a particular writing speed, and
wherein a target for the recording power associated with a different writing speed other than the particular one is calculated by performing a linear approximation on the parameter that is adapted for only the particular writing speed.

10. An integrated circuit for performing a write operation on a storage medium, which is adapted for multiple different writing speeds and on which writing conditions associated with each of the multiple writing speeds are stored in advance, with the best recording power,
wherein the writing conditions include a parameter that defines a target for the recording power associated with each said writing speed, and
wherein the integrated circuit controls the recording power by calculating the target for the recording power associated with each said writing speed using the parameter such that signals generated by scanning recorded areas have substantially equal degrees of modulation.

11. A recorder for writing data on an information storage medium, on which a number of tracks are arranged either concentrically or spirally and on which data is to be written as marks and spaces between the marks by irradiating the storage plane of the tracks with a light beam,
wherein in determining the power of the light beam to irradiate to perform the write operation,
a first pulse position parameter value, a first recording power value for writing data at a first linear velocity using the first pulse position parameter value, and a second recording power value for writing data at a second linear velocity, which is lower than the first linear velocity, using the first pulse position parameter value are stored in a predetermined area on either the information storage medium or the recorder, and
wherein the recorder calculates the first recording power for writing data at the first linear velocity based on the first recording power value, the second recording power value, and the second recording power in a situation where a test write operation has been performed at the second linear velocity using the first pulse position parameter value.

12. A recorder for writing data on an information storage medium, on which a number of tracks are arranged either concentrically or spirally and on which data is to be written as marks and spaces between the marks by irradiating the storage plane of the tracks with a light beam,
wherein in determining the power of the light beam to irradiate to perform the write operation,
a first pulse position parameter value, a first recording power value for writing data at a first linear velocity using the first pulse position parameter value, a second pulse position parameter value, and a second recording power value for writing data at a second linear velocity, which is lower than the first linear velocity, using the second pulse position parameter value are stored in a predetermined area on either the information storage medium or the information recorder, and
wherein the recorder calculates the first recording power for writing data at the first linear velocity based on the first recording power value, the second recording power value, and the second recording power in a situation where a test write operation has been performed at the second linear velocity using the second pulse position parameter value.

13. A recorder for writing data on an information storage medium, on which a number of tracks are arranged either concentrically or spirally and on which data is to be written as marks and spaces between the marks by irradiating the storage plane of the tracks with a light beam,
wherein in determining the power of the light beam to irradiate to perform the write operation,
a first pulse position parameter value for writing data at a first linear velocity is stored in a predetermined area on either the information storage medium or the information recorder, and
wherein the recorder calculates a first recording power for writing data at the first linear velocity based on a second recording power in a situation where a test write operation has been performed at a second linear velocity, which is lower than the first linear velocity, using the first pulse position parameter value and a third recording power in a situation where a test write operation has been performed at a third linear velocity, which is lower than the second linear velocity, using the first pulse position parameter value.

14. A method for playing the information storage medium of claim 1, the method comprising the steps of:

    irradiating the information storage medium with a light beam; and
    reading the writing conditions from the information storage medium.

# FIG.1

BCA
AREA  110

LEAD-IN
AREA  120

USER
AREA  130

LEAD-OUT
AREA  140

100

PIC
AREA  121

PCA (OPC)
AREA  122

INFO
AREA  123

# FIG.2

ZONE0    ZONE1

WRITING SPEED

X6

X4

X4X6ZCLV

24mm    Amm    58mm

RADIAL LOCATION ON
OPTICAL DISC

RECORDING POWER

ymW

xmW

X4X6ZCLV

24mm    Amm    58mm

RADIAL LOCATION ON
OPTICAL DISC

$\beta$

60%

5%

DEGREE OF MODULATION

24mm    Amm    58mm

RADIAL LOCATION ON
OPTICAL DISC

# FIG.3

# FIG.4

ZONE0 ZONE1

WRITING SPEED

X6PCAV

X6
X4

24mm    Amm    58mm

RADIAL LOCATION ON
OPTICAL DISC

RECORDING POWER

X6PCAV

ymW

xmW

24mm    Amm    58mm

RADIAL LOCATION ON
OPTICAL DISC

60%

β
5%    DEGREE OF MODULATION

24mm    Amm    58mm

RADIAL LOCATION ON
OPTICAL DISC

# FIG.5

WRITING SPEED

ZONE0  ZONE1  ZONE2

X8 ......... X8PCAV

X4

24mm  Amm  Bmm  58mm

RADIAL LOCATION ON
OPTICAL DISC

RECORDING POWER

ymW ......... X8PCAV

xmW

24mm  Amm  Bmm  58mm

RADIAL LOCATION ON
OPTICAL DISC

ZZ%

YY%

β

5%

XX%

60%

DEGREE OF MODULATION

24mm  Amm  Bmm  58mm

RADIAL LOCATION ON
OPTICAL DISC

## FIG.6

## FIG.7A

*FIG.7B*

150
152
153
154

*FIG.8*

150

202

OPTI-
CAL
HEAD

213

LASER
DRIVER

212

READING
SECTION

203  204

WRITE DATA
GENERATING
SECTION

214

215

205

207

DEMODULA-
TION AND ECC

206

RECORDING POWER
DETERMINING SECTION

209  208

RECORDING POWER SETTING
SECTION

210

211

*FIG.9*

203

PREAMPLIFIER

221

S/H

222

A/D

223

ALU

224

207

BINARY DATA GENERATING
SECTION

225

205

*FIG.10*

*FIG.11*

*FIG.12*

1601
1602

SIGNAL LEVEL WHEN LASER IS TURNED OFF

*FIG.13A*

DEGREE OF MODULATION

RECORDING POWER

*FIG.13B*

RECORDING POWER

*FIG.13C*

*FIG.14*

*FIG.15*

*FIG.16*

*FIG.17*

WRITING SPEED

X12 ....... X12CAV
X10 ....... X10CAV
X8 ....... X8PCAV or X4X6x8ZCLV
X6 ....... X6PCAV or X4X6ZCLV
X5
X4 ....... X4CLV

24mm    Amm    Bmm    58mm

RADIAL LOCATION ON OPTICAL DISC

40

*FIG.18*

FIRST PULSE          MIDDLE PULSES          LAST PULSE

# FIG.19

FIRST PULSE    MIDDLE PULSES    LAST PULSE

*FIG.20*

## INTERNATIONAL SEARCH REPORT

| | International application No. |
|---|---|
| | PCT/JP2008/003591 |

A. CLASSIFICATION OF SUBJECT MATTER
*G11B7/0045*(2006.01)i, *G11B7/007*(2006.01)i, *G11B7/125*(2006.01)i

According to International Patent Classification (IPC) or to both national classification and IPC

B. FIELDS SEARCHED

Minimum documentation searched (classification system followed by classification symbols)
G11B7/0045, G11B7/007, G11B7/125

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-115110 A (Yamaha Corp.),<br>18 April, 2003 (18.04.03),<br>Par. Nos. [0053] to [0063]<br>& US 2003/0036861 A1 & EP 1286344 A2 | 7-10 |
| Y | JP 2003-228832 A (Ricoh Co., Ltd.),<br>15 August, 2003 (15.08.03),<br>Par. Nos. [0018] to [0022]; Fig. 2<br>(Family: none) | 7-10 |
| A | WO 2005/043515 A1 (Pioneer Corp.),<br>12 May, 2005 (12.05.05),<br>Par. Nos. [0061], [0107] to [0112]<br>& US 2007/0109934 A1 | 1-6,11-14 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 February, 2009 (24.02.09) | Date of mailing of the international search report<br>10 March, 2009 (10.03.09) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/003591

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:
    The inventions of claims 1-6, 11-14 relate to an information recording medium using recording conditions including: a recording power parameter and a recording waveform parameter for performing a recording at each of the recording speeds; and other recording power parameter for performing a recording at a recording speed other than the aforementioned recording speeds by using the recording power parameter for performing a recording at the recording speed.
    The inventions of claims 7-10 relate to calculation of a target recording power for each of the recording speeds so that the reproduced signal has an identical modulation degree.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3259642 B

- JP 2006147125 A